# EUROPÄISCHE PATENTANMELDUNG

(11) **EP 3 091 037 A1**
(43) Veröffentlichungstag der Anmeldung: **09.11.2016**
(21) Anmeldenummer: 15166848.0
(22) Anmeldetag: 07.05.2015
(51) Int. Cl.: C08F 2/38

(54) **SULFONSÄUREESTER ALS REGLER IN RADIKALISCHEN POLYMERISATIONSREAKTIONEN**

(71) Anmelder: Ivoclar Vivadent AG, 9494 Schaan (LI); Technische Universität Wien, 1040 Wien (AT)
(72) Erfinder: Liska, Robert, 2123 Schleinbach (AT); Gorsche, Christian, Dr., 1140 Wien (AT); Seidler, Konstanze, 2105 Oberrohrbach (AT); Moszner, Norbert, 9493 Mauren (LI)
(74) Vertreter: Uexküll & Stolberg

(57) **Zusammenfassung**

Die Erfindung betrifft die Verwendung von Sulfonsäureestern der nachstehenden Formel 1 und/oder Formel 2, einzeln oder als Gemisch mehrerer davon, als Regler bei Polymerisationsreaktionen von radikalisch polymerisierbaren, ethylenisch ungesättigten Monomeren: 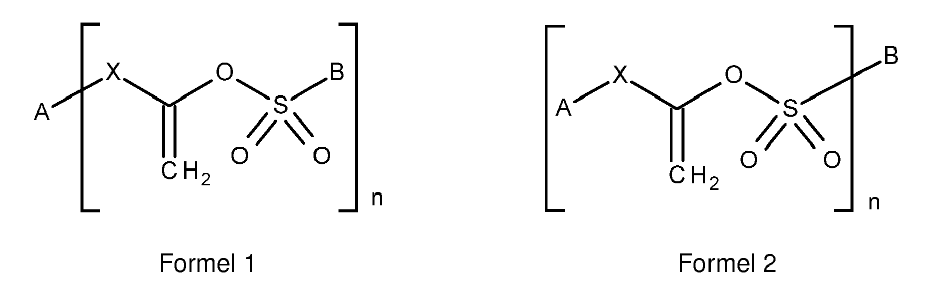 worin
A jeweils unabhängig ausgewählt ist aus H, CN, linearen, verzweigten oder zyklischen aliphatischen oder aromatischen C₁-C₃₀-Kohlenwasserstoffresten;
X jeweils unabhängig -COO- oder -CON(R¹)- ist, wobei die Bindung an A über O oder N erfolgt, oder fehlt, wenn A ein aromatischer Kohlenwasserstoffrest oder CN ist;
B jeweils unabhängig ausgewählt ist aus linearen, verzweigten oder zyklischen aliphatischen oder aromatischen C₁-C₃₀-Kohlenwasserstoffresten;
R¹ jeweils unabhängig ausgewählt ist aus Wasserstoff und linearen, verzweigten oder zyklischen aliphatischen oder aromatischen C₁-C₁₀-Kohlenwasserstoffresten, die gegebenenfalls mit einer oder mehreren OH-Gruppen substituiert sind, wobei die aliphatischen Kohlenwasserstoffreste gegebenenfalls durch ein oder mehrere Sauerstoffatome unterbrochen sind; und
n jeweils unabhängig eine ganze Zahl von 1 bis 6 ist.

## Beschreibung

Die vorliegende Erfindung betrifft die Verwendung von Sulfonsäureestern als Regler bei radikalischen Polymerisationsreaktionen.

### STAND DER TECHNIK

Radikalische Polymerisate werden durch radikalische Polymerisation von einem (Homopolymerisat) oder mehreren (Copolymerisat) radikalisch polymerisierbaren Monomeren gebildet. Dabei werden je nach der Funktionalität der polymerisierten Monomere lineare (bei monofunktionellen Monomeren) oder vernetzte (bei di- oder multifunktionellen Monomeren) Polymere erhalten.

Radikalische Polymerisationen lassen sich bekanntlich in Substanz (Bulkpolymerisation), Lösung, Suspension oder Emulsion durchführen. Zur Polymerisationsauslösung werden radikalbildende Initiatoren zugesetzt, die durch Thermolyse, Photolyse oder Redoxreaktion Radikale bilden. Die radikalische Polymerisation läuft nach einem Kettenwachstumsmechanismus ab, bei dem sich die polymerisationsauslösenden Radikale, die sog. Primärradikale, an die Doppelbindung der Monomere addieren. Die so gebildeten Startradikale addieren in einer schnellen Wachstumsreaktion an viele weitere Monomermoleküle, bis das Wachstum der Polymerradikale durch Kombination oder Disproportionierung abgebrochen wird und so die fertigen Makromoleküle entstehen.

Bei der radikalischen Polymerisation kommt es häufig zu Kettenübertragungen. Hierbei abstrahiert das Polymerradikal durch homolytische Bindungsspaltung anderes Atom ein Elektron aus einem zweiten Molekül, z.B. aus einem Monomer-, Lösungsmittel- oder Polymermolekül. Das dabei am zweiten Molekül neu gebildete Radikal kann wieder eine Polymerisation auslösen. Durch die Zugabe von Kettenüberträgern, sog. Reglern oder Kettenreglern lässt sich die zahlenmittlere Molmasse des Polymers gezielt regulieren (vgl. H. G. Elias, Makromoleküle, Bd. 1, 6. Aufl., Wiley-VCH, Weinheim etc. 199, 299-352). Zu den bekannten Kettenüberträgern zählen beispielsweise die Mercaptane, die durch Übertragung eines H-Atoms Thiyl-Radikale bilden, die dann eine neue Polymerisationssequenz initiieren.

Als Kettenüberträger haben sich außerdem doppelbindungshaltige Reagenzien besonders bewährt, die nach einem radikalischen Additions-Fragmentierungs-Kettenübertragungs-Mechanismus (engl.: "**a**ddition-**f**ragmentation **c**hain **t**ransfer", AFCT) reagieren. Als AFCT-Reagenzien sind Schwefelverbindungen, wie Allylsulfide, Allylsulfone, Dithioester, Dithiocarbamate, Xanthate und Trithiocarbonate besonders wirksam und gut untersucht (Moad et al., Polymer 49, 1079-1131 (2008)). Darüber hinaus sind reversible AFCT-Reagenzien (RAFT-Reagenzien), wie z.B. Dithioester, Dithiocarbamate, Trithiocarbonate oder Xanthate, aus der kontrollierten radikalischen Polymerisation bekannt (Moad et al., s.o.; US 5.932.675).

Die Verwendung der bekannten übertragungsaktiven Verbindungen ermöglicht so allerdings nicht nur eine Kontrolle des Molekulargewichts der Polymere durch Kettenabbruch, sondern verzögert in unerwünschter Weise auch die Geschwindigkeit, mit der die Polymerisation voranschreitet, da es durch die zwischenzeitliche Stabilisierung des Radikals die Kettenreaktion verzögert.

Weiters offenbart die US 2.694.699 die Homo- und Copolymerisation von α-Sulfonyloxyacrylaten zu "hochmolekularen Harzprodukten". Auch wird der optionale Zusatz von Alkylmercaptanen als Kettenregler offenbart.

Die Erfinder des vorliegenden Anmeldungsgegestandes haben in früheren Arbeiten (vgl. die WO 2013/034778 A1 und die noch unveröffentlichte EP 14 17 6730) herausgefunden, dass sich ähnliche AFCT-Regler wie in Moad et al. (s.o.) beschrieben hervorragend zur Verwendung in Dentalwerkstoffen eignen, da sie den so hergestellten Polymerisaten Debonding-on-Demand-Eigenschaften verleihen, d.h. das gezielte Lösen von Klebeverbindungen (z.B. von Zahnhalteklammern in der Kieferorthopädie, sog. "Brackets") ermöglichen. Dies wird durch ein homogeneres Netzwerk mit scharfem Glasübergang erreicht, was auf die regelnde Wirkung des Transferreagens zurückzuführen ist. Das homogenere Netzwerk führt auch zu einer deutlichen Verbesserung der Schlagzähigkeit, und das in einem gegenüber den bekannten Materialien deutlich verbessertem Maße. Zusätzlich wird der Gelpunkt hin zu höheren Umsätzen während der Polymerisation verschoben, was zu geringeren Schrumpfspannungen der Polymerisate führt.

Diese Regler haben jedoch den Nachteil, dass sie die Polymerisationsgeschwindigkeiten, speziell bei der Polymerisation von (Meth)acrylaten und Vinylestern, in zu hohem Ausmaß bremsen und dadurch eine inhibierende Wirkung auf das Kettenwachstum dieser Monomere ausüben.

Vor diesem Hintergrund war das Ziel der Erfindung, Kettenüberträger, also Regler, bereitzustellen, die zwar eine regulierende Wirkung auf das Kettenwachstum bei der Polymerisation von radikalisch polymerisierbaren, ethylenisch ungesättigten Monomeren ausüben, die Reaktionsgeschwindigkeit aber nicht in unerwünscht hohem Ausmaß bremsen.

### OFFENBARUNG DER ERFINDUNG

Dieses Ziel erreicht die Erfindung durch Bereitstellung der neuen Verwendung von - an sich teilweise bekannten - Sulfonsäureestern der nachstehenden Formel 1 und/ oder Formel 2, einzeln oder als Gemisch mehrerer davon, als Regler bei Polymerisationsreaktionen von radikalisch polymerisierbaren, ethylenisch ungesättigten Monomeren: 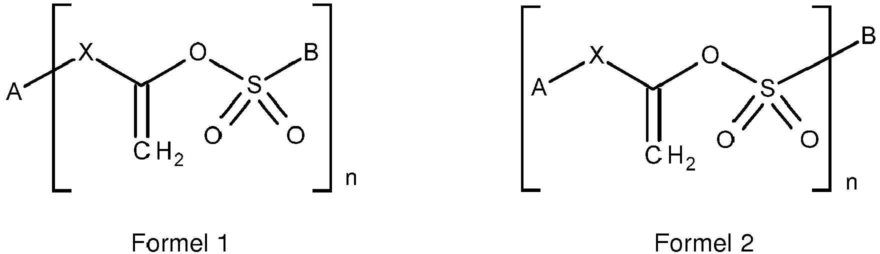 worin
A jeweils unabhängig ausgewählt ist aus H, CN, linearen, verzweigten oder zyklischen aliphatischen oder aromatischen C₁-C₃₀-Kohlenwasserstoffresten, die gegebenenfalls mit einem oder mehreren Substituenten substituiert sind, wobei die aliphatischen Kohlenwasserstoffreste gegebenenfalls durch eine oder mehrere Urethangruppen, Estergruppen, O und/oder S unterbrochen sind;
X jeweils unabhängig -COO- oder -CON(R¹)- ist, wobei die Bindung an A über O oder N erfolgt, oder fehlt, wenn A ein aromatischer Kohlenwasserstoffrest oder CN ist;
B jeweils unabhängig ausgewählt ist aus linearen, verzweigten oder zyklischen aliphatischen oder aromatischen C₁-C₃₀-Kohlenwasserstoffresten, die gegebenenfalls mit einem oder mehreren Substituenten substituiert sind, wobei die aliphatischen Kohlenwasserstoffreste gegebenenfalls durch eine oder mehrere Urethangruppen, Estergruppen, O und/oder S unterbrochen sind;
R¹ jeweils unabhängig ausgewählt ist aus Wasserstoff und linearen, verzweigten oder zyklischen aliphatischen oder aromatischen C₁-C₁₀-Kohlenwasserstoffresten, die gegebenenfalls mit einer oder mehreren OH-Gruppen substituiert sind, wobei die aliphatischen Kohlenwasserstoffreste gegebenenfalls durch ein oder mehrere Sauerstoffatome unterbrochen sind; und
n jeweils unabhängig eine ganze Zahl von 1 bis 6 ist.

Die Erfinder haben nämlich überraschenderweise herausgefunden, dass durch formales Ersetzen des Kohlenstoffatoms in den Sulfonylallyl-Gruppierungen der aus Moad et al. (s.o.) bekannten Allylsulfonen bzw. Sulfonylmethylacrylaten durch ein Sauerstoffatom die Eignung der so erhaltenen Vinylsulfonaten bzw. Sulfonyloxyacrylaten, -acrylamiden oder -acrylnitrilen als Regler deutlich verbessert wird, insbesondere bei der Polymerisation von (anderen) Vinylestern und (Meth)acrylaten.

Die in früheren Arbeiten der Erfinder mit Sulfonylmethacrylaten festgestellte gesteigerte Schlagzähigkeit und verringerte Schrumpfspannung der Polymerisate werden durch die Verwendung der Sulfonsäureester als Regler gemäß vorliegender Erfindung zumindest beibehalten, wenn nicht sogar weiter verbessert. Gleichzeitig wird auch der Gelpunkt in einen vorteilhaften Bereich zu höheren Umsätzen hin verschoben, was zu deutlich geringeren Schrumpfspannungen führt. Das bedeutet, dass im Vergleich zur Verwendung von Sulfonylmethacrylaten zwar ebenfalls die Kettenlänge und damit das Molekulargewicht der Polymerisate gegenüber einer polymerisierbaren Zusammensetzung ohne Regler steuerbar verringert wird, aber die Geschwindigkeit der Kettenreaktion nicht so stark gesenkt wird, dass der Regler schon nahezu inhibierende Wirkung zeigt.

Das Molverhältnis zwischen den ethylenischen Unsättigungen in den radikalisch polymerisierbaren Monomeren und den Sulfonatgruppierungen in den als Regler dienenden Sulfonsäureestern der Formeln 1 und 2 beträgt gemäß vorliegender Erfindung zumindest 2:1 und in bevorzugten Ausführungsformen zumindest 3:1, noch bevorzugter zumindest 5:1 oder zumindest 10:1, um die Kettenlängen durch die Gegenwart des Reglers nicht zu stark zu reduzieren. Bezogen auf das Molekulargewicht werden vorzugsweise 50 bis 99 Gew.-%, noch bevorzugter 60 bis 98 Gew.-%, noch bevorzugter 70 bis 95 Gew.-%, der ethylenisch ungesättigten Monomere, bezogen auf das Gesamtgewicht der Monomere und Regler, eingesetzt, was einerseits von den Substituenten A und B in Formel 1 und 2 und andererseits von den jeweils zu polymerisierenden Monomeren abhängt. Das gemäß vorliegender Erfindung vorzugsweise eingesetzte Lösungsmittel ist besonders bevorzugt aus Wasser, Dimethylsulfoxid, Ethanol, Dimethylformamid, Polyethylenglykol, Acetonitril, THF, Methylenchlorid, Chlorform, Benzol und Gemischen davon ausgewählt, um eine homogene Lösung der Monomere und Regler zu gewährleisten, ohne das Kettenwachstum zu behindern.

Besonders bevorzugt sind gemäß vorliegender Erfindung die ethylenisch ungesättigten Monomere aus (Meth)acrylaten, Vinylestern und Gemischen davon, noch bevorzugter aus multifunktionellen (Meth)acrylaten und Vinylestern ausgewählt, da die vorliegende Erfindung hier - möglicherweise aufgrund der strukturellen Ähnlichkeit der Sulfonsäure-Vinylester der Formeln 1 und 2 - bisher die besten Ergebnisse geliefert hat.

Falls nicht einer der Substituenten an den Resten A oder B zur Initiierung der radikalischen Polymerisation fähig ist, wird in der Polymerisationsreaktion zumindest ein radikalischer Polymerisationsinitiator und gegebenenfalls zumindest ein Lösungsmittel eingesetzt, was beides bevorzugt ist, um die Reaktionsbedingungen exakter steuern zu können. Dabei werden vorzugsweise 0,01 bis 5 Gew.-%, noch bevorzugter 0,1 bis 5 Gew.-%, insbesondere 0,1 bis 3 Gew.-%, bezogen auf das Gesamtgewicht der Monomere und Regler, zumindest eines radikalischen Polymerisationsinitiators eingesetzt.

In bevorzugten Ausführungsformen der Erfindung ist der Rest A aus Kohlenwasserstoffresten mit 1 bis 20, vorzugsweise 1 bis 12, Kohlenstoffatomen ausgewählt. Alternativ oder zusätzlich dazu umfasst Rest A vorzugsweise einen aliphatischen Kohlenwasserstoffrest, der gegebenenfalls durch 1 bis 4 Urethangruppen, Estergruppen oder Sauerstoffatome, vorzugsweise Sauerstoffatome, unterbrochen ist und gegebenenfalls mit 1 bis 4 OH-Gruppen substituiert ist.

Weiters umfassen die Reste A und/oder B vorzugsweise zumindest einen Phenyl-, Phenylen-, Naphthyl- oder Naphthylenrest, vorzugsweise 1 bis 4, noch bevorzugter 1 oder 2, Phenyl- oder Phenylenreste, wobei der zumindest eine Phenyl-, Phenylen-, Naphthyl- oder Naphthylenrest noch bevorzugter mit 1 bis 3 Substituenten, ausgewählt aus -OH, -CH₃ und -OCH₃ substituiert ist.

Die Reste R¹ sind hingegen vorzugsweise aliphatische C₁₋₆-Kohlenwasserstoffreste, die gegebenenfalls durch 1 bis 2 Sauerstoffatome unterbrochen und gegebenenfalls mit 1 bis 2 OH-Gruppen substituiert sind.

Weiters ist X vorzugsweise i) entweder -COO-, wobei die Bindung an A über O erfolgt, d.h. die Sulfonyloxy-Gruppierung in den Sulfonsäureestern der Formel 1 oder 2 ist entweder in α-Stellung an die Carboxylgruppe eines Acrylats gebunden, ii) oder X fehlt, in welchem Fall A ein aromatischer Kohlenwasserstoffrest mit 6 Kohlenstoffatomen ist, der gegebenenfalls mit 1 bis 3 Substituenten, ausgewählt aus -CH₃, -OH und -OCH₃ substituiert ist, so dass die Verbindungen der Formel 1 und 2 jeweils einen mit A substituierten Sulfonsäurevinylester darstellen.

Weiters ist gemäß vorliegender Erfindung der Parameter n vorzugsweise 1 bis 4, noch bevorzugter 1 bis 2, insbesondere 2, wodurch die Kettenlänge der erhaltenen Polymerisate steuerbar ist: Bei n = 2 dient der Regler als Verknüpfungsstelle zweier wachsender Polymerketten und verdoppelt daher im Mittel das Molekulargewicht der Ketten, bei n > 2 verzweigt sich die Polymerkette an der Stelle des Regler sternförmig. Mehr als 4 von einer Stelle ausgehende Kettenstränge können allerdings speziell im Hinblick auf die Herstellung vernetzter Polymerisate unvorteilhaft sein, da so die Vernetzungsdichte unerwünscht hoch sein kann.

In besonders bevorzugten Ausführungsformen der Erfindung:
ist A für n = 1 aus gegebenenfalls verzweigtem und gegebenenfalls durch Sauerstoffatome unterbrochenem C₁₋₁₀-Alkyl und Phenyl ausgewählt, die bei n > 1 mit weiteren Sulfonsäurevinylester- oder Sulfonyloxyacryloyloxy- bzw. SulfonyloxyacrylamidoGruppierungen substituiert sein können;
ist B für n = 1 aus OH, C₁₋₁₀-Alkyl, Phenyl und Naphthyl ausgewählt, die gegebenenfalls mit OH, C₁₋₆-Alkyl oder -Alkoxy, Benzyl oder Phenoxy substituiert sind und bei n > 1 mit weiteren Vinyloxysulfonyl-Gruppierungen substituiert sein können; und
ist R¹ aus C₁₋₁₀-Alkyl ausgewählt.

Besonders bevorzugte Sulfonsäureester der Formeln 1 und 2 sind aus den folgenden ausgewählt:

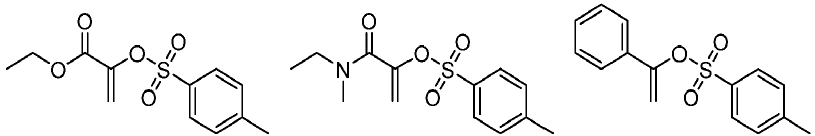

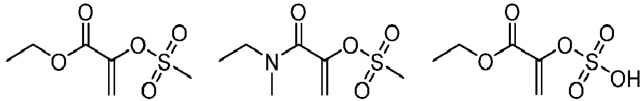

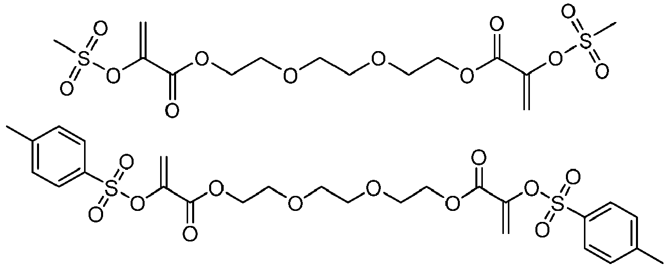

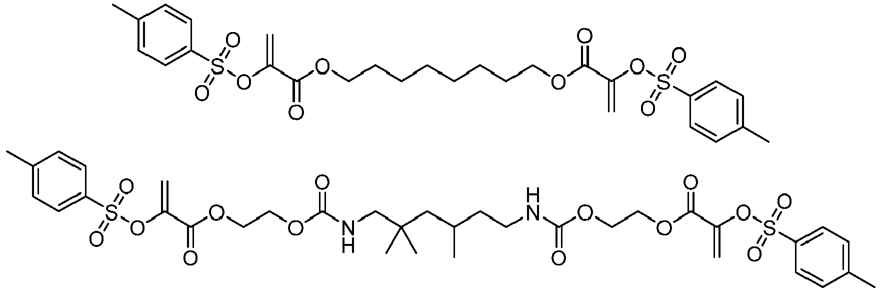

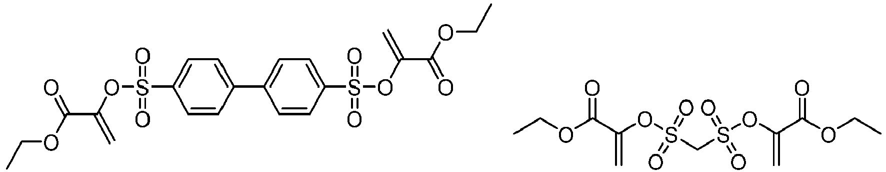

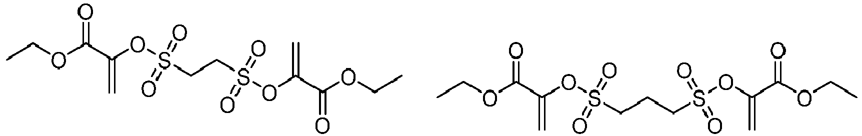

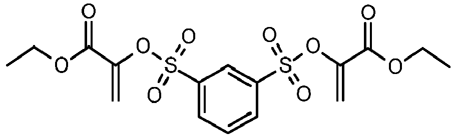

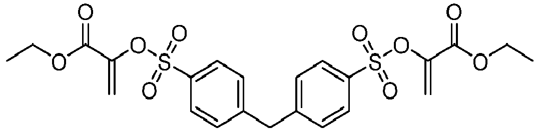

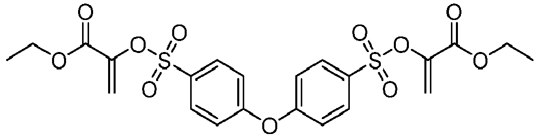

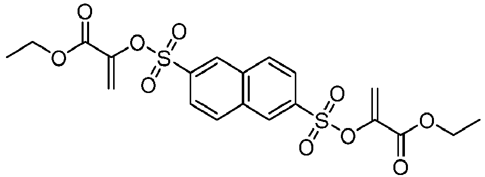

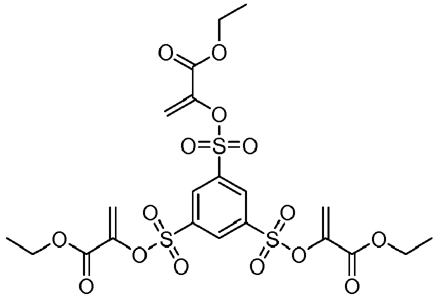

In einem zweiten Aspekt betrifft die Erfindung ein Polymerisat, das durch radikalische Polymerisation unter Verwendung von Sulfonsäureestern der Formel 1 und/oder Formel 2, wie oben definiert, erhalten wurde und das aufgrund der Gegenwart des Reglers an den Kettenenden eine charakteristische Struktur aufweist, wie dies später noch näher erläutert wird. Vorzugsweise handelt es sich dabei um ein vernetztes Polymerisat.

Derartige, erfindungsgemäß unter Verwendung von Sulfonsäureestern der Formel 1 und/oder 2 hergestellte Zusammensetzungen und daraus erhaltene Polymerisate sind für eine Vielzahl von Anwendungen in vorteilhafter Weise einsetzbar, weswegen die Erfindung in einem dritten Aspekt auch die Verwendung solcher vernetzter Polymerisate als Lacke, Beschichtungen oder Klebstoffe oder zur Herstellung von Formkörpern durch Gießen oder 3D-Druck betrifft.

### KURZBESCHREIBUNG DER ZEICHNUNGEN

Die vorliegende Erfindung wird in der Folge unter Bezugnahme auf die beiliegenden Zeichnungen näher beschrieben, die Folgendes zeigen:
Fig. 1 ein Foto eines Biegetests mit einem erfindungsgemäßen Polymerisat;
die Fig. 2a und 2b jeweils ein Foto eines Schrumpfungstests; und
die Fig. 3, 4a und 4b jeweils ein Foto der Bruchfläche eines Polymerisats.

### DETAILLIERTE BESCHREIBUNG DER ERFINDUNG

Verbindungen der Formeln 1 und 2 sind zum Teil bereits bekannt und nach bekannten Synthesemethoden herstellbar. Beispielsweise lassen sich durch Umsetzung von Brenztraubensäurederivaten mit Sulfonylhalogeniden unter basischen Bedingungen polymerisationsübertragungsaktiven Verbindungen der Formeln 1 und 2 erhalten:

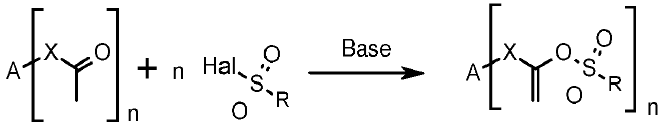

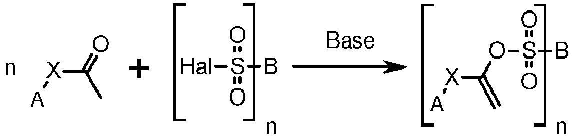

Ein konkretes Beispiel ist:

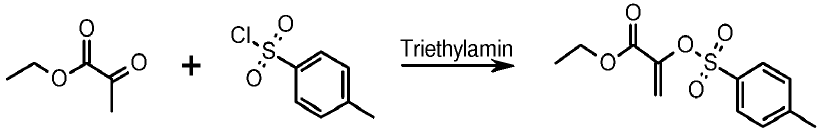

Exemplarische und für manche Anwendungen mitunter auch bevorzugte Beispiele für n = 1, wo Formel 1 und Formel 2 identisch sind, sind die folgenden Verbindungen:

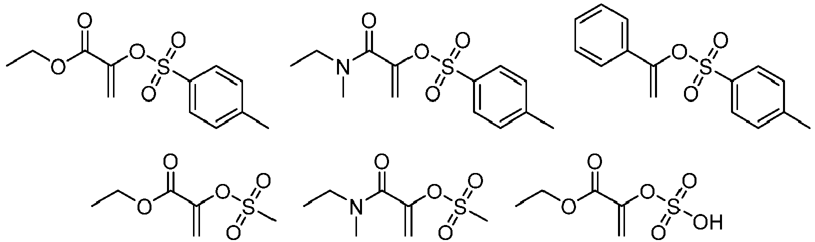

Bevorzugte Beispiele für Verbindungen der Formel 1 mit n = 2 sind die folgenden:

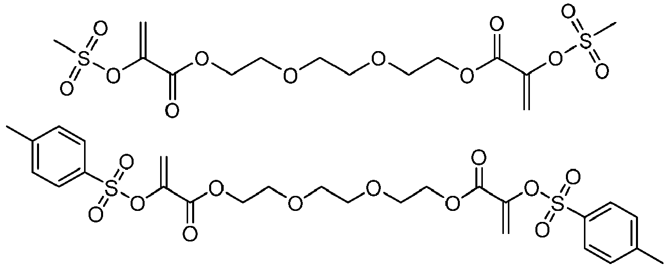

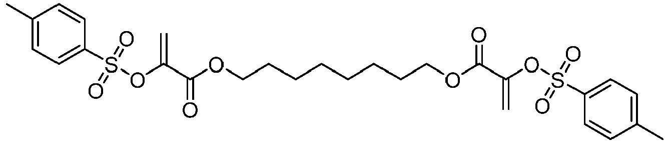

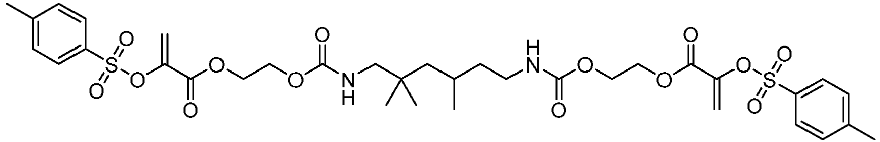

Bevorzugte Beispiele für Verbindungen der Formel 2 mit n = 2 sind die folgenden:

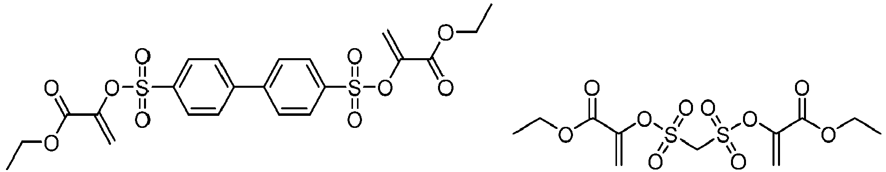

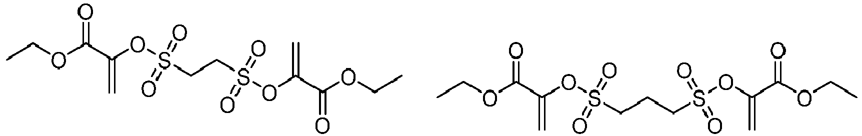

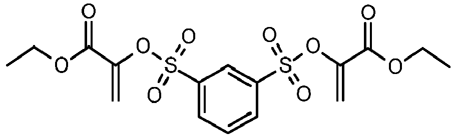

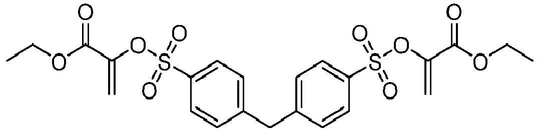

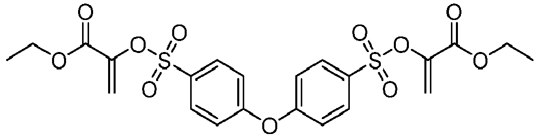

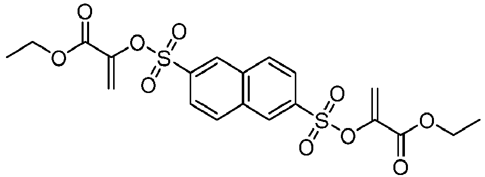

Und ein bevorzugtes Beispiel für Verbindungen der Formel 2 mit n = 3 ist:

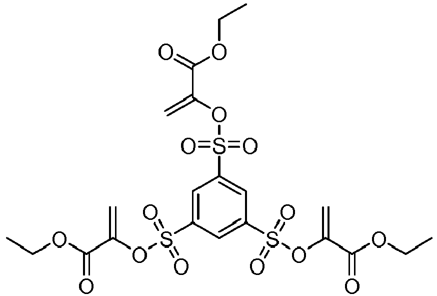

Bei erfindungsgemäßer Verwendung der Verbindungen der Formel 1 oder 2 als Regler in radikalischen Polymerisationsreaktionen lassen sich die Kettenlängen und mitunter auch die Netzwerkstruktur bei der Polymerisation von mono- und multifunktionellen, ethylenisch ungesättigten Monomeren, insbesondere von (Meth)acrylaten und Vinylestern, sowie Gemischen davon steuern. Im Vergleich zur Reaktion ohne Regler ergeben sie Polymernetzwerke mit einem engeren Glasübergang, d.h. der Glasübergang findet in einem engeren Temperaturbereich statt. Außerdem werden homogenere Polymernetzwerke erhalten, d.h. Netzwerke, die dadurch charakterisiert sind, dass sie eine engere Verteilung der Molmasse zwischen den Vernetzungspunkten aufweisen. Dies hat den Vorteil, dass Kettenspannungen durch Relaxationsprozesse besser abgebaut werden und z.B. ein schnelleres Debonding-on-Demand (DoD) bewirkt werden kann.

Außerdem wurde überraschenderweise gefunden, dass die Verbindungen der Formeln 1 und 2 bei der Polymerisation von (Meth)acrylaten die Glasübergangstemperatur der Polymerisate deutlich verringern ohne die mechanischen Eigenschaften bei Raumtemperatur und die Polymerisationsgeschwindigkeit nennenswert zu verringern. Eine verringerte Glasübergangstemperatur hat den Vorteil, dass die Polymeren bei niedrigeren Temperaturen erweicht werden können. Dies gestattet z.B. im Fall von Adhäsiven und Zementen ein gezieltes Lösen der Klebeverbindung (d.h. Debonding-on-Demand).

Darüber hinaus zeichnen sich die erhaltenen Polymermaterialien durch verbesserte Schlagzähigkeit aus, was beispielsweise bei stereolithographisch hergestellten Formkörpern (z.B. 3D-Druck, Rapid Prototyping) von großem Vorteil ist.

Die Verbindungen der Formeln 1 und 2 bewirken bei der vernetzenden Polymerisation, z.B. von multifunktionellen (Meth)acrylaten oder Vinylestern, eine deutliche Verzögerung der Gelbildung gegenüber der ungeregelten Reaktion und gewährleisten damit eine längere Gelzeit, d.h. dass sich das dreidimensionale Polymernetzwerk erst später ausbildet. Die verlängerte Gelzeit wirkt sich günstig auf die Polymerisationsschrumpfungsspannung (PKS) aus, weil innere Spannungen länger durch Fließprozesse ausgeglichen werden können, was etwa bei komplizierten Geometrien von Formteilen von großem Vorteil ist.

Überraschenderweise verzögern die Sulfonatester gemäß vorliegender Erfindung jedoch die Polymerisation bei weitem nicht in jenem Maße, wie dies zuvor mit den aus Moat et al. (s.o.) bekannten Sulfonylmethylacrylaten bzw. Allylsulfonen der Fall war, was die späteren Ausführungsbeispiele klar belegen.

Besonders bevorzugt sind Ausführungsformen, bei denen als radikalisch polymerisierbares Monomer zumindest ein multifunktionelles Monomer, noch bevorzugter zumindest ein multifuntionelles/-r (Meth)acrylat oder Vinylester, insbesondere ein Gemisch aus mono- und multifunktionellen Monomeren zum Einsatz kommt. Unter monofunktionellen Monomeren werden Verbindungen mit einer, unter polyfunktionellen Monomeren werden Verbindungen mit zwei oder mehr, vorzugsweise 2 bis 4, radikalisch polymerisierbaren ethylenischen Unsättigungen verstanden.

Insbesondere umfassen die Zusammensetzungen gemäß vorliegender Erfindung mindestens ein Dimethacrylat oder ein Gemisch aus Mono- und Dimethacrylaten. Materialien, die als radikalisch polymerisierbare Monomere mono- und multifunktionelle (Meth)acrylate enthalten, eignen sich besonders als Adhäsive, Lacke, Druckfarben sowie für den 3D-Druck.

Beispiele für besonders geeignete mono- bzw. multifunktionelle (Meth)acrylate sind Methyl-, Ethyl-, 2-Hydroxyethyl-, Butyl-, Benzyl-, Tetrahydrofurfuryl- oder Isobornyl-(meth)acrylat, p-Cumylphenoxyethylenglykolmethacrylat (CMP-1 E), Bisphenol-A-di(meth)acrylat, Bis-G(M)A (ein Additionsprodukt aus (Meth)acrylsäure und Bisphenol-A-diglycidylether), ethoxy- oder propoxyliertes Bisphenol-A-di(meth)acrylat, wie z.B. das Bisphenol-A-dimethacrylat SR-348c (Sartomer) mit 3 Ethoxygruppen oder 2,2-Bis[4-(2-(meth)acryloxypropoxy)phenyl]propan, UD(M)A (ein Additionsprodukt aus 2-Hydroxyethyl(meth)acrylat und 2,2,4- oder 2,4,4-Trimethylhexamethylen-1,6-diisocyanat), Di-, Tri- oder Tetraethylenglycoldi(meth)acrylat, Trimethylolpropantri-(meth)acrylat, Pentaerythrittetra(meth)acrylat, sowie Glycerindi- und tri(meth)acrylat, 1,4-Butandioldi(meth)acrylat, 1,10-Decandioldi(meth)acrylat (D₃MA), 1,12-Dodecandioldi(meth)acrylat oder oligomere Polyether-, Polyester-, Epoxy-, Silikon- oder Urethan(meth)acrylate.

Geeignet sind außerdem auch thermo- oder photolabile Di(meth)acrylate, wie z.B. das Additionsprodukt aus 2 mol 2-Acetoacetoxyethylmethacrylat und 1 mol 2,2,4- oder 2,4,4-Trimethylhexamethylen-1,6-diisocyanat (thermolabil) oder Methacrylsäure-2-[2-(4-{2-methyl-2-[2-(methacryloyloxy)ethylcarbamoyloxy]propionyl}phenoxy)ethoxycarbonylamino]ethylester. Gemisch aus thermo- oder photolabilen Monomeren und Verbindungen der Formel 1 oder 2 eignen sich besonders für Werkstoffe mit Debonding-on-Demand-Eigenschaften.

Zur Initiierung der radikalischen Photopolymerisation werden vorzugsweise Benzophenon, Benzoin sowie deren Derivate oder α-Diketone oder deren Derivate, wie z.B. 9,10-Phenanthrenchinon, 1-Phenylpropan-1,2-dion, Diacetyl oder 4,4'-Dichlorbenzil, eingesetzt. Besonders bevorzugt werden Campherchinon (CQ) und 2,2-Dimethoxy2-phenylacetophenon und ganz besonders bevorzugt α-Diketone in Kombination mit Aminen als Reduktionsmittel, wie z.B. 4-(Dimethylamino)benzoesäureester (EDMAB), N,N-Dimethylaminoethylmethacrylat, N,N-Dimethyl-sym.-xylidin oder Triethanolamin, verwendet. Gut geeignet sind auch Norrish-Typ-I-Photoinitiatoren, vor allem Acyl- der Bisacylphosphinoxide, und insbesondere Monoacyltrialkyl- bzw. Diacyldialkylgermanium-Verbindungen, wie z.B. Benzoyltrimethylgermanium, Dibenzoyldiethylgermanium oder Bis(4-methoxybenzoyl)diethylgermanium (MBDEGe). Dabei lassen sich vorteilhaft auch Gemische der verschiedenen Photoinitiatoren einsetzen, wie z.B. Bis(4-methoxybenzoyl)diethylgermanium in Kombination mit Campherchinon und 4-Dimethylaminobenzoesäureethylester.

Als Initiatoren für die Heißhärtung eignen sich besonders thermische Initiatoren, wie etwa Azoverbindungen, z.B. Azobis-isobutyronitril, oder Peroxide, z.B. Dibenzoylperoxid, sowie Benzpinakol und 2,2'-Dialkylbenzpinakole. Als Initiatoren für eine bei Raumtemperatur durchgeführte Polymerisation werden vorzugsweise Redox-Initiatorkombinationen ("Redoxinitiator"), wie z.B. Kombinationen von Benzoylperoxid mit N,N-Dimethyl-sym.-xylidin oder N,N-Dimethyl-p-toluidin, verwendet. Darüber hinaus sind auch Redoxsysteme bestehend aus Peroxiden und solchen Reduktionsmitteln, wie z.B. Ascorbinsäure, Barbituraten oder Sulfinsäuren, besonders geeignet.

Gemäß einer bevorzugten Ausführungsform der Erfindung werden während der Polymerisation zusätzlich organische oder anorganische partikuläre Füllstoffe, besonders bevorzugt ein oder mehrere anorganische partikuläre Füllstoffe, zugesetzt. Gemische, die Monomere und Füllstoffe enthalten, werden als Komposite bezeichnet. Besonders geeignet sind Füllstoffe auf der Basis von Oxiden mit einer Partikelgröße von 0,010 bis 15 µm, wie SiO₂, ZrO₂ und TiO₂ bzw. Mischoxiden aus SiO₂, ZrO₂, ZnO und/oder TiO₂, nanopartikuläre oder mikrofeine Füllstoffe mit einer Partikelgröße von 10 bis 300 nm, wie pyrogene Kieselsäure oder Fällungskieselsäure sowie Glaspulver mit einer Partikelgröße von 0,01 bis 15 µm, vorzugweise von 0,2 bis 1,5 µm, wie Quarz-, Glaskeramik- oder röntgenopake Glaspulver von z.B. Barium- oder Strontiumaluminiumsilikatgläsern, und röntgenopake Füllstoffe mit einer Partikelgröße von 0,2 bis 5 µm, wie Ytterbiumtrifluorid, Tantal(V)-oxid, Bariumsulfat oder Mischoxide von SiO2 mit Ytterbium(III)-oxid oder Tantal(V)-oxid. Auch faserförmige Füllstoffe, Nanofasern oder Whiskers sind nicht ausgeschlossen. Wenn nicht anders angegeben, handelt es sich bei allen Partikelgrößen um gewichtsmittlere Partikelgrößen.

Die Füllstoffe werden nach der Partikelgröße unterteilt in Makrofüller und Mikrofüller. Makrofüller werden durch Mahlen von Quarz, röntgenopaken Gläsern, Borosilikaten oder von Keramik gewonnen, sind rein anorganischer Natur und bestehen meist aus splitterförmigen Teilen. Bevorzugt sind Makrofüller mit einer mittleren Partikelgröße von 0,2 bis 10 mm. Als Mikrofüller werden vorzugsweise pyrogenes SiO₂ oder Fällungskieselsäure eingesetzt, oder auch Mischoxide, z.B. SiO₂-ZrO₂, die durch hydrolytische Cokondensation von Metallalkoxiden zugänglich sind. Die Mikrofüller haben vorzugsweise eine mittlere Partikelgröße von ca. 5 bis 100 nm.

Zur Verbesserung des Verbundes zwischen den Füllstoffpartikeln und der vernetzten Polymerisationsmatrix können SiO₂-basierende Füllstoffe mit (Meth)acrylat-funktionalisierten Silanen oberflächenmodifiziert werden. Ein Beispiel für solche Silane ist 3-(Meth)acryloyl-oxypropyltrimethoxysilan. Zur Oberflächenmodifizierung von nichtsilikatischen Füllstoffen, z.B. von ZrO₂ oder TiO₂, können auch funktionalisierte saure Phosphate, wie z.B. 10-(Meth)acryloyloxydecyldihydrogenphosphat eingesetzt, werden.

Der Füllungsgrad richtet sich nach dem gewünschten Anwendungszweck. Füllungskomposite haben vorzugsweise einen Füllstoffgehalt von 75-90 Gew.-% und Kompositzemente von 50-75 Gew.-%.

Die erfindungsgemäßen Polymerisate können in manchen bevorzugten Ausführungsformen beispielsweise 0 bis 90 Gew.-%, bevorzugt 0 bis 80 Gew.-% und besonders bevorzugt 0 bis 70 Gew.-% Füllstoff(e), bezogen auf das Gesamtgewicht aller enthaltenen Komponenten, umfassen, wobei der Füllstoffgehalt wie oben beschrieben auf die geplante Verwendung der Polymerisate abgestimmt wird.

Gegebenenfalls können die erfindungsgemäßen Reaktionsgemische auch weitere Additive enthalten, vor allem Stabilisatoren, Farbmittel, mikrobiozide Wirkstoffe, Treibmittel, optische Aufheller, Weichmacher oder UV-Absorber, beispielsweise in einer Menge von 0 bis 5 Gew.-%, vorzugsweise 0 bis 3 Gew.-% und besonders bevorzugt 0,2 bis 3 Gew.-%, bezogen auf das Gesamtgewicht aller enthaltenen Komponenten.

Die erfindungsgemäßen Polymerisate können in Abhängigkeit vom gewünschten Einsatzzweck vorteilhafterweise auch ein oder mehrere Lösungsmittel enthalten, vorzugsweise 0 bis 80 Gew.-%, besonders bevorzugt 0 bis 60 Gew.-% und insbesondere 0 bis 40 Gew.-% Lösungsmittel, bezogen auf das Gesamtgewicht aller enthaltenen Komponenten. Bevorzugte Lösungsmittel sind Wasser, Ethanol, Polyethylenglykol und Gemische davon.

Besonders bevorzugt sind Polymerisate, die nur hierin explizit angeführte Komponenten enthalten. Weiterhin sind Polymerisate bevorzugt, bei denen die einzelnen Komponenten jeweils aus den hierin genannten bevorzugten und besonders bevorzugten Stoffen ausgewählt sind. Besonders bevorzugt sind außerdem Polymerisate, die neben den Verbindungen der Formel 1 und 2 keine anderen Schwefelverbindungen und insbesondere keine flüchtigen Mercaptane enthalten, d.h. Verbindungen, die einen typischen Mercaptangeruch aufweisen.

Die erfindungsgemäß hergestellten Polymerisate haben ähnliche mechanische Eigenschaften (Biegefestigkeit und E-Modul) wie auf Dimethacrylaten basierende Materialien, zeichnen sich jedoch durch eine verringerte Polymerisationsschrumpfungsspannung (PKS), eine verbesserte Schlagzähigkeit und geringen Eigengeruch aus.

Allerdings sind derartige Reaktionsgemische und die daraus hergestellten Polymerisate aufgrund ihrer hauptsächlich durch das oder die jeweils eingesetzte(n) Monomer(e) für eine Vielzahl von Anwendungen geeignet, wie etwa als Lacke oder Beschichtungen auf diversen Oberflächen, z.B. als dekorative Beschichtungen und Schutzschichten auf Holz, Papier, Karton und insbesondere Kunststoff, Keramik oder Metall. Besonders die geringe Polymerisationsverzögerung ist hier vorteilhaft, während die Zähigkeit und damit die Beständigkeit der Beschichtungen gegenüber äußeren mechanischen Einflüsse deutlich verbessert werden kann. Weiters können sie als Klebstoffe zum Verbinden unterschiedlichster Werkstoffe, oder auch zur Herstellung von Formkörpern durch Gießen, Pressen, Rapid Prototyping oder 3D-Druck dienen. Besonders die verbesserte Schlagzähigkeit lässt diese Materialien nun auf gleiches Niveau wie gängige Thermoplaste kommen. Zusätzlich ist die geringe Verzögerung bei der Härtung für den 3D-Druck essentiell.

Eine besonders bevorzugte Anwendung der erfindungsgemäßen Materialien liegt im Bereich des 3D-Drucks von Keramikpulvern über Lithographie-basierte Verfahren. Hierbei stellt das erfindungsgemäß hergestellte Photopolymer die Opferstruktur beim Sinterprozess dar. Durch das homogenere Netzwerk kann die Neigung zu Rissbildung vermindert werden.

Ein weiterer wesentlicher Einsatz der erfindungsgemäßen Materialien ist im Bereich der Geweberegeneration. Durch geeignete Wahl der Zusammensetzung können sowohl Hydrogele (z.B. aus Zusammensetzungen mit geringem Monomergehalt in Wasser) bzw. sogenannte "PEG-o-Gele" (d.h. mit Polyethylenglykol als Lösungsmittel) als auch steife, elastische Körper (z.B. aus lösungsmittelfreien Zusammensetzungen mit hohem Anteil an polyfunktionellen Monomeren) gebildet werden, die beispielsweise als Gewebe-, Knorpel- oder Knochenersatz Anwendung finden können. Weiters können die so erhaltenen Polymere als Gewebestützen, z.B. für Herzklappen, als Grundmaterial für Shunts und Stents sowie als Kleber und Verschlüsse (z.B. Patches) für verletzungs- oder genetisch bedingte Gewebeschäden eingesetzt werden. Durch Rapid Prototyping können auch komplizierte Strukturen, wie z.B. jene von Knochen oder Knochenstücken, rasch, relativ kostengünstig sowie äußerst maßgetreu nachgebildet werden. Besonders bevorzugt für diese Anwendungen sind Formulierungen auf Basis von Vinylestern, Vinylcarbonaten und Vinylcarbamaten als radikalisch polymerisierbare Monomere. Diese eignen sich aufgrund ihrer geringen Toxizität auch zur Härtung *in vivo* nach direktem Auftrag derselben auf geschädigtes Gewebe. Sie können jedoch beispielsweise auch in einem gegebenenfalls biologisch abbaubaren Beutel oder dergleichen in den Körper eingebracht, in die gewünschte Form gebracht und danach *in vivo* oder *ex vivo* gehärtet werden. Ein besonderer Vorteil der erfindungsgemäßen Formulierungen ist hier in der deutlich verbesserten Zähigkeit der Materialien zu sehen.

Die Erfindung wird nachstehend anhand von konkreten Ausführungsbeispielen näher erläutert, die für die vorliegende Erfindung illustrativ, aber nicht als Einschränkung zu verstehen sind.

### BEISPIELE

### Synthesebeispiel 1

### Synthese von 2-Methansulfonyloxyacrylsäureethylester 1

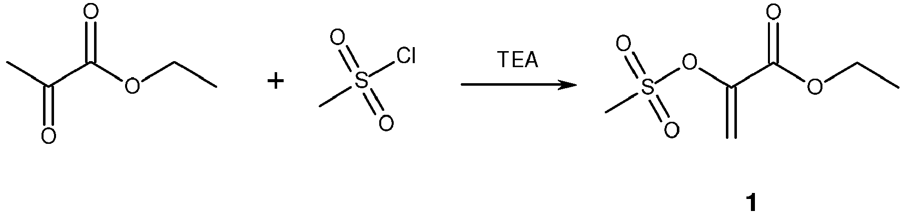

Eine Lösung von Brenztraubensäureethylester (23,22 g, 0,20 mol) in Dichlormethan (200 ml) wurde bei -5 °C mit Triethylamin (TEA, 24,23 g, 0,24 mol) versetzt. Methansulfonylchlorid (27,49 g, 0,24 mol) wurde zugetropft. Anschließend wurde das Reaktionsgemisch zunächst 1 h lang bei -5 °C und dann bei Umgebungstemperatur weitergerührt. Nach 22 h wurde die gelbe Reaktionslösung mit Wasser (5x 100 ml) und gesättigter wässriger NaCl-Lösung (100 ml) gewaschen, über wasserfreiem Na₂SO₄ getrocknet, filtriert und am Rotationsverdampfer eingeengt. Das Rohprodukt wurde mittels Säulenchromatographie (SiO₂, *n*-Hexan/Ethylacetat 9:1) gereinigt, wobei 14,99 g (39 % d. Th.) von **1** als gelbliche Flüssigkeit erhalten wurden.

¹H-NMR (CDCl₃, 400 MHz): δ = 1,35 (t, 3H; *J* = 7,2 Hz; CH₃), 3,28 (s, 3H; S-CH₃), 4,31 (q, 2H; J = 7,2 Hz; O-CH₂), 5,81 (d, 1 H; *J* = 2,3 Hz; =CH), 6,22 (d, 1 H; *J* = 2,3 Hz; =CH).

¹³C-NMR (CDCl₃, 100,6 MHz): δ = 13,9 (CH₃), 38,8 (S-CH₃), 62,2 (O-CH₂), 117,4 (=CH₂), 142,9 (=C), 161,0 (C=O).

IR (neat): 2986 (w), 2942 (w), 1731 (s), 1638 (m), 1468 (w), 1362 (s), 1334 (m), 1296 (s), 1187 (s), 1172 (m), 1136 (vs), 1019 (m), 956 (s), 895 (m), 861 (m), 790 (s), 684 (m), 627 (m) cm⁻¹.

Elementaranalyse für C₆H₁₀O₅S: ber. C 37,11; H 5,19; S 16,51; gef. C 37,31; H 5,18; S 16,40.

### Synthesebeispiel 2

### Synthese von 2-(Toluol-4-sulfonyloxy)acrylsäureethylester 2

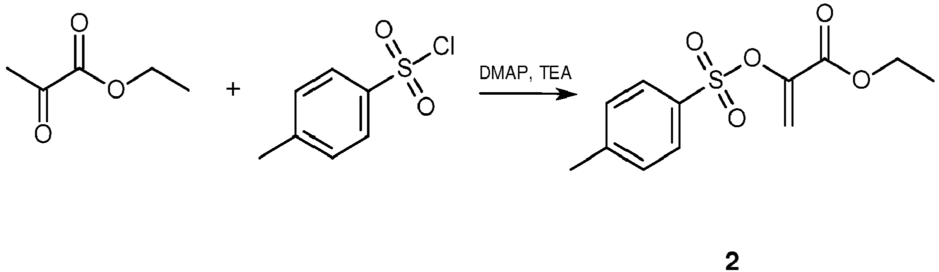

Zu einer Lösung von Brenztraubensäureethylester (5,81 g, 50,0 mmol), *p*-Toluolsulfonylchlorid (11,44 g, 60,0 mmol) und N,N-Dimethylaminopyridin (DMAP, 0,44 g, 3,6 mmol) in Dichlormethan (100 ml) wurde TEA (9,11 g, 90,0 mmol) zugetropft. Die Reaktionslösung wurde 24 h lang bei Umgebungstemperatur gerührt, mit Wasser (3x 100 ml) und gesättigter wässriger NaCl-Lösung (100 ml) gewaschen, über wasserfreiem Na₂SO₄ getrocknet, filtriert und am Rotationsverdampfer eingeengt. Das Rohprodukt wurde mittels Säulenchromatographie (SiO₂, *n*-Hexan/Ethylacetat 9:1) gereinigt, wobei 8,88 g (66 % d. Th.) von **2** als gelbliches Öl erhalten wurden.

¹H-NMR (CDCl₃, 400 MHz): δ = 1,22 (t, 3H; *J* = 7,2 Hz; CH₃), 2,45 (s, 3H; Ar-CH₃), 4,15 (q, 2H; *J*= 7,2 Hz; O-CH₂), 5,62 (d, 1H; *J=* 2,1 Hz; =CH), 6,14 (d, 1H; *J =* 2,4 Hz; =CH), 7,36 (d, 2H; *J*= 8,2 Hz; Ar-H), 7,83 (d, 2H; *J*= 8,4 Hz; Ar-H).

¹³C-NMR (CDCl₃, 100,6 MHz): δ = 13,8 (CH₃), 21,5 (Ar-CH₃), 61,9 (O-CH₂), 116,8 (=CH₂), 128,4 (Ar-CH), 129,6 (Ar-CH), 132,4 (Ar-C), 143,2 (=C), 145,5 (Ar-C), 160,7 (C=O).

IR (neat): 2984 (w), 1732 (s), 1639 (m), 1597 (m), 1494 (w), 1447 (w), 1372 (s), 1293 (s), 1194 (s), 1178 (s), 1140 (vs), 1090 (s), 1018 (m), 955 (s), 894 (m), 860 (m), 815 (m), 781 (m), 710 (s), 695 (s), 660 (s) cm⁻¹.

Elementaranalyse für C₁₂H₁₄O₅S: ber. C 53,32; H 5,22; S 11,86; gef. C 53,49; H 5,23; S 11,57.

### Synthesebeispiel 3

### Synthese von Triethylenglykol-bis[2-(toluol-4-sulfonyloxy)acrylat] 3

### 1. Stufe: Triethylenglykoldipyruvat

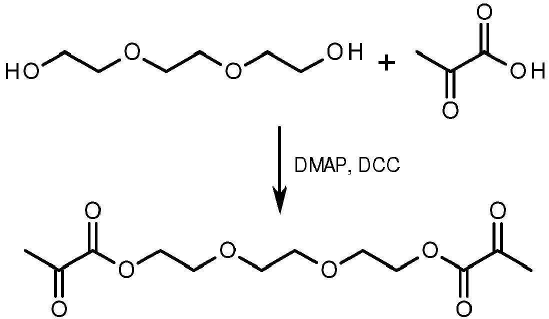

Eine Lösung von Brenztraubensäure (9,25 g, 0,105 mol), Triethylenglykol (7,51 g, 50,0 mmol) und DMAP (0,60 g, 5,0 mmol) in Dichlormethan (100 ml) wurde auf -5 °C abgekühlt. *N,N'*-Dicyclohexylcarbodiimid (22,69 g, 0,11 mol) wurde langsam zugegeben. Das Reaktionsgemisch wurde 2 h lang bei 0 °C und anschließend bei RT weitergerührt. Nach 24 h wurde die Suspension durch eine Schicht Kieselgel filtriert (SiO₂, Ethylacetat). Das Filtrat wurde am Rotationsverdampfer eingeengt. Das Rohprodukt wurde mittels Säulenchromatographie (SiO₂, n-Hexan/Ethylacetat 1:1) gereinigt, wobei 6,08 g (42 % d. Th.) einer gelben Flüssigkeit erhalten wurden.

¹H-NMR (CDCl₃, 400 MHz): δ = 2,48 (s, 6H; CH₃), 3,67 (s, 4H; CH₂), 3,80 (m, 4H; CH₂), 4,40 (m, 4H; CH₂).

¹³C-NMR (CDCl₃, 100,6 MHz): δ = 26,4 (CH₃), 65,0 (CH₂), 68,2 (CH₂), 70,3 (CH₂), 160,4 (C=O), 191,3 (C=O).

IR (neat): 3452 (w), 2874 (w), 1727 (vs), 1450 (w), 1420 (w), 1358 (m), 1298 (s), 1123 (s), 1029 (m), 975 (m), 944 (m), 857 (m), 718 (m), 604 (m) cm⁻¹.

Elementaranalyse für C₁₂H₁₈O₈: ber. C 49,65; H 6,25; gef. C 49,16; H 6,45.

### 2. Stufe: Triethylenglykol-bis[2-(toluol-4-sulfonyloxy)acrylat] 3

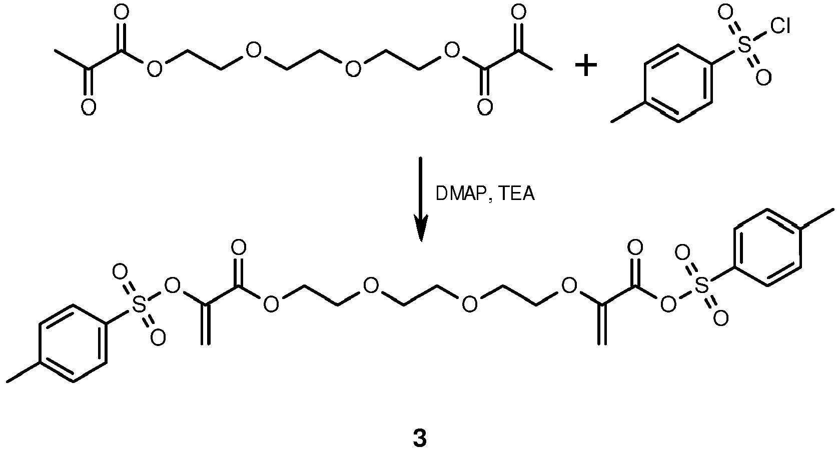

Triethylenglykoldipyruvat (5,81 g, 20,0 mmol), *p*-Toluolsulfonylchlorid (9,53 g, 50,0 mmol) und *N,N*-Dimethylaminopyridin (0,36 g, 3,0 mmol) wurden in Dichlormethan (100 ml) gelöst und Triethylamin (7,29 g, 72,0 mmol) wurde zugetropft. Das Reaktionsgemisch wurde 24 h lang bei RT gerührt, mit Wasser (3x 100 ml) und gesättigter wässriger NaCl-Lösung (100 ml) gewaschen, über Na₂SO₄ getrocknet, filtriert und am Rotationsverdampfer eingeengt. Das braune Öl wurde in n-Hexan/Ethylacetat 1:1 (25 ml) und Dichlormethan (5 ml) gelöst und durch eine Schicht Kieselgel filtriert (SiO₂, *n*-Hexan/Ethylacetat 1:1). Das Filtrat wurde am Rotationsverdampfer eingeengt. Das bräunliche Öl wurde mit Diethylether (100 ml) versetzt, wobei sich ein bräunlicher Niederschlag bildete. Dieser wurde abfiltriert, durch wiederholtes Digerieren mit Diethylether weiter gereinigt und im Vakuumtrockenschrank getrocknet, wobei 3,64 g (30 % d. Th.) von **3** als weißer Feststoff erhalten wurden.
Fp.: 943 °C (Et₂O)

¹H-NMR (CDCl₃, 400 MHz): δ = 2,45 (s, 6H; Ar-CH₃), 3,65 (s, 4H; CH₂), 3,68 (m, 4H; CH₂), 4,26 (m, 4H; CH₂), 5,60 (d, 2H; *J* = 2,2 Hz; =CH), 6,15 (d, 2H; *J* = 2,2 Hz; =CH), 7,36 (d, 4H; *J=* 8,1 Hz; Ar-H), 7,84 (d, 4H; *J=* 8,2 Hz; Ar-H).

¹³C-NMR (CDCl₃, 100,6 MHz): δ = 21,6 (CH₃), 64,9 (CH₂), 68,5 (CH₂), 70,5 (CH₂), 117,1 (=CH₂), 128,5 (Ar-CH), 129,7 (Ar-CH), 132,3 (Ar-C), 142,9 (=C), 145,6 (Ar-C), 160,8 (C=O).

IR (neat): 3053 (w), 2958 (w), 2911 (w), 2865 (w), 1735 (s), 1636 (m), 1596 (m), 1495 (w), 1460 (m), 1372 (s), 1328 (w), 1301 (m), 1250 (w), 1192 (s), 1177 (s), 1147 (s), 1130 (vs), 1088 (s), 1051 (m), 1017 (m), 958 (s), 906 (w), 875 (m), 850 (m), 823 (m), 806 (m), 798 (m), 784 (s), 713 (s), 693 (s), 658 (s), 638 (m) cm⁻¹.

Elementaranalyse für C₂₆H₃₀O₁₂S₂: ber. C 52,17; H 5,05; S 10,71; gef. C 51,93; H 5,45; S 10,70.

### Synthesebeispiel 4

### Synthese von 2-(Toluol-4-sulfonylmethyl)acrylsäureethylester 4

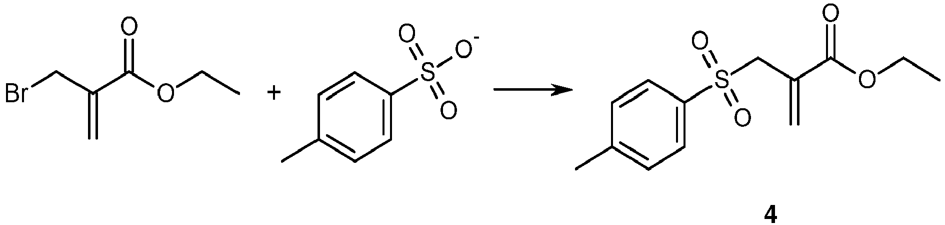

Ethyl-2-(brommethyl)acrylat (1,13 g, 5,8 mmol), Natrium-p-toluolsulfonat (1,15 g, 6,4 mmol) und 0,12 g Polyethylenoxid 400 wurden unter Argon-Atmosphäre in 10 ml abs. THF vorgelegt und 5 h lang rückflusserhitzt, wobei der Reaktionsfortschritt mittels NMR-Spektroskopie und Dünnschichtchromatographie überwacht wurde. Nach vollständiger Reaktion wurde die Reaktionslösung mit 10 ml entionisiertem Wasser und 10 ml Diethylether verdünnt, und die wässrige Phase wurde dreimal mit je 25 ml Diethylether extrahiert. Die vereinigten organischen Phasen wurden danach mit Kochsalzlösung gewaschen, über Natriumsulfat getrocknet und am Rotationsverdampfer eingeengt. Das erhaltene Rohprodukt wurde mittels Säulenchromatographie (SiO₂, Petrolether/Ethylacetat 1:1) gereinigt, wobei 1,35 g (5,0 mmol; 86% d. Th.) von **4** als weiße Kristalle erhalten wurden.
Rf: 0,53 (PE/EE 1:1)

Fp.: 46,9 °C

¹H-NMR (200 MHz, CDCl₃, δ): 1,17 (t, *J=* 7,2 Hz, 3H; -COO-CH₂-CH₃), 2,43 (s, 3H; Ar-CH₃), 4,02 (q, *J=* 7,2 Hz, 2H; -COO-CH₂-CH₃), 4,13 (s, 2H; -SO₂-CH₂-C-), 5,89 (s, 1 H; =CH₂), 6,49 (s, 1 H; =CH₂), 7,32 (d, *J=* 8,2 Hz, 2H; Ar-H), 7,73 (d, *J=* 8,2 Hz, 2H; Ar-H).

¹³C-NMR (50 MHz, CDCl₃, δ): 14,0 (C1), 21,6 (C1), 57,5 (C2), 61,4 (C2), 128,8 (C3), 129,2 (C4), 129,6 (C3), 133,2 (C2), 135,4 (C4), 144.8 (C4), 164,8 (C=O).

### Synthesebeispiel 5

### Synthese von Triethylenglykol-bis[2-methansulfonyloxy)acrylat] 5

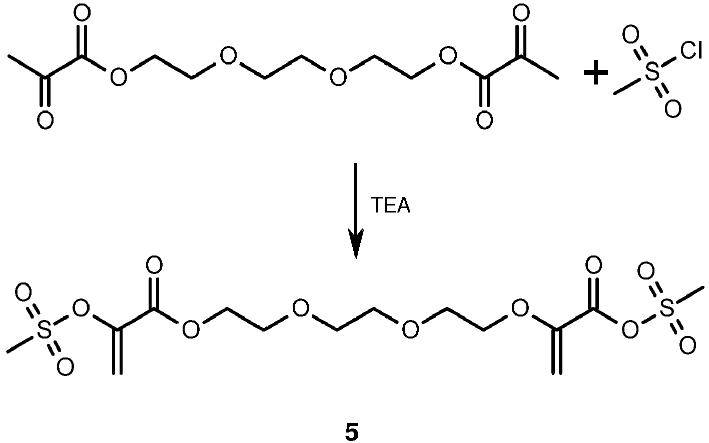

Eine Lösung von *Triethylenglykoldipyruvat* (5,19 g, 17,9 mmol) in Dichlormethan (100 ml) wurde bei -5 °C mit Triethylamin (15,69 g, 0,15 5 mol) versetzt, und Methansulfo-nylchlorid (17,76 g, 0,155 mol) wurde zugetropft. Anschließend wurde das Reaktionsgemisch zunächst 1 h lang bei -5 °C und dann bei Um gebungstemperatur weitergerührt. Nach 24 h wurde die gelb-braune Reaktionslösung mit Wasser (5x 100 ml) und gesättigter wässriger NaCl-Lösung (100 ml) gewaschen, über Na₂SO₄ getrocknet, filtriert und am Rotationsverdampfer eingeengt. Das Rohprodukt wurde mittels Säulenchromatographie (SiO₂, *n*-Hexan/Aceton 3:2) gereinigt, wobei 1,69 g (3,8 mmol; 21% d. Th.) von **5** als gelbliche Flüssigkeit erhalten wurden.

Rf: 0,22 (n-Hexan/Aceton 3:2)

¹H-NMR (CDCl₃, 400 MHz): δ = 3.28 (s, 6H; CH₃), 3.65 (s, 4H; CH₂), 3.75 (m, 4H; CH₂), 4.39 (m, 4H; CH₂), 5.83 (d, 2H; *J* = 2.4 Hz; =CH), 6.26 (d, 2H; *J* = 2.4 Hz; =CH).

¹³C-NMR (CDCl₃, 100.6 MHz): δ = 38.9 (CH₃), 65.1 (CH₂), 68.7 (CH₂), 70.5 (CH₂), 118.2 (=CH₂), 142.7 (=C), 161.1 (C=O).

IR (neat): 3025 (w), 2940 (w), 1732 (s), 1638 (m), 1454 (w), 1358 (s), 1294 (s), 1185 (s), 1135 (vs), 1031 (m), 954 (vs), 863 (m), 789 (s), 686 (s), 628 (m) cm⁻¹.

### Synthesebeispiel 6

### Synthese von Diethyl-2,2'-([1,3-phenyldisulfonyl]bis[oxy])diacrylat 6

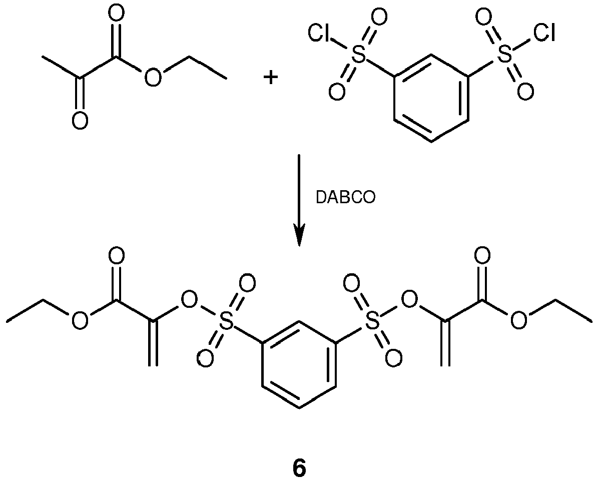

Zu einer Lösung von 1,4-Diazabicyclo[2.2.2]octan (13,05 g, 38,8 mmol) in abs. CH₂Cl₂ (50 ml) wurde unter Rührung und Argonatmosphäre eine Lösung von Ethylpyruvat (9,70 g, 83,5 mmol) und Benzoldisulfonylchlorid (10,66 g, 116,3 mmol) in abs. CH₂Cl₂ (150 ml) zugetropft. Die Reaktionslösung wurde 72 h lang bei Raumtemperatur gerührt, mit CH₂Cl₂ (200 ml) verdünnt und durch Kieselgel filtriert. Die Aufarbeitung erfolgte mittels Ausschütteln mit 1%iger HCl (2x 150 ml), entionisiertem Wasser (2x 150 ml) und gesättigter wässriger NaCl-Lösung (150 ml). Die organische Phase wurde über wasserfreiem Na₂SO₄ getrocknet, filtriert und am Rotationsverdampfer eingeengt, wobei 12,38 g (73 % d. Th.) von (**6**) als leicht viskose, gelbliche Flüssigkeit mit einer NMR-Reinheit von 98 % erhalten wurden.

Rf: 0,50 (PE/EE 2:1)

¹H-NMR (CDCl₃, 200 MHz): δ = 8,46 (t, 1 H, J = 1,47 Hz, ar-2H), 8,21 (t, 2H, J = 7,33 Hz, ar-4H, ar-6H) 7,77 (t, 1 H, J = 7,93, ar-5H), 6,16 (d, 2H, J = 2,49 Hz, 2x >C=CH₂, cis), 5,69 (d, 2H, J = 2,54 Hz, 2x >C=CH₂, trans), 4,09 (q, 4H, J = 6,79 Hz, 2x O-CH₂-), 1,17 (t, 6H, J = 7,14 Hz, 2x -CH₃).

¹³C-NMR (CDCl₃, 50 MHz, δ): 181,9 (>C=), 160,4 (O-C=O), 143,0 (ar-S), 133,9 (ar-C4, ar-C6), 133,7 (ar-C5), 134,4 (ar-C2), 117,8 (=CH₂), 62,2 (O-CH₂-), 13,8 (-CH₃).

### Beispiele 1 und 2, Vergleichsbeispiele 1 bis 13

### Reaktivitätsmessungen

Um die Reaktivität der neuen Verbindungen mit bekannten Konzepten zu vergleichen, wurden mit den hergestellten Mischungen Photo-DSC-Messungen durchgeführt. Als unmodifiziertes Basis-Harz wurde ein äquimolares Gemisch der kommerziell erhältlichen Dimethacrylate Urethandimethacrylat (UDMA, Isomerengemisch; CAS: 72869-86-4) und 1,10-Decandioldimethacrylat (D₃MA) (Harzmischung 2M) eingesetzt, um vernetzte Polymerisate zu erhalten. Dieser Basismischung wurden anschließend 0,20 Doppelbindungsäquivalente des jeweiligen Reglers zugesetzt. Bei Verbindungen mit ungenügender Löslichkeit wurde der Anteil auf 0,05 Doppelbindungsäquivalente verringert (in Tabelle 1 mit * gekennzeichnet).

Für die Polymerisation wurde ein Netzsch DSC 204 F1 mit Autosampier verwendet. Die Messung wurde isotherm bei 25 °C unter Stickstoffatmosphäre durchgeführt. 10 ± 1 mg Probenmischung wurden in ein Aluminum-DSC-Schälchen eingewogen, das mittels Autosampier in der DSC Kammer platziert wurde. Die Probe wurde 4 min lang mit Stickstoff gespült (20ml/min) und anschließend 5 min lang mittels gefiltertem UV-Licht (400-500 nm; Omnicure 2000) mit einer Intensität von 1 W/cm² am Strahlenausgang der Lampe bestrahlt. Zur Beurteilung der Reaktivität wurden die Zeit bis zum Erreichen von 95 % des maximalen Umsatzes (t₉₅) und die Zeit bis zum Erreichen der maximalen Polymerisationsgeschwindigkeit (tₘₐₓ) herangezogen.

Da neben der Polymerisationsgeschwindigkeit auch die Regelung des Molekulargewichts essentiell ist, wurden zusätzlich Proben mit monofunktionellem Benzylmethacrylat (BMA) hergestellt. Die Proben wurden ebenfalls 4 min lang mit Stickstoff gespült (20 ml/Min) und anschließend 5 min lang mittels gefiltertem UV-Licht (400-500 nm; Omnicure 2000) mit einer Intensität von 1 W/cm² am Strahlenausgang der Lampe bestrahlt. Die polymerisierten Proben wurden in THF gelöst und mit einer Waters GPC mit drei in Serie geschalteten Säulen (Styragel HR 0.5, Styragel HR 3 und Styragel HR 4) und einem Waters 2410 RI Detektor in einem Säulenofen bei 40 °C und mit einer Flussrate von 1,0 ml/min analysiert. Zur Kalibrierung wurden Polystyrolstandards verwendet. Das Verhältnis zwischen dem zahlenmittleren Molekulargewicht des modifizierten Polymers und jenem von reinem Poly-BMA (Mn_{mod}/Mn_{BMA}) zeigt, wie stark das durchschnittliche Molekulargewicht durch den Regler gesenkt wird. Wünschenswert ist eine starke Verringerung des Molekulargewichts, d.h. ein niedriger Wert des Verhältnisses Mn_{mod}/Mn_{BMA}, bei gleichzeitig hoher Polymerisationsgeschwindigkeit, d.h. relativ niedrigen Werten für t₉₅ und tₘₐₓ in der obigen Reaktion mit UDMA/D₃MA. Zusätzlich ist das Erreichen eines hohen Doppelbindungsumsatzes (DBC) erstrebenswert, um die nötigen mechanischen Eigenschaften des Polymerisats zu gewährleisten. In der Folge wird der Doppelbindungsumsatz für das Monomerengemisch UDMA/D₃MA als DBC_{U/D} und jener für das BMA-Monomer alleine mit DBC_{BMA} bezeichnet.

Als Regler wurden dabei die Verbindungen **1** und **2** gemäß vorliegender Erfindung unter anderem mit jenen, die aus Moad et al. (s.o.) bzw. früheren Forschungen der Erfinder bekannt waren, darunter Verbindung **4**, sowie weiteren Transferreaganzien verglichen.

Bei Vergleichsbeispiel 1 (V1) handelte es sich entweder um das reine Methacrylat-basierte Gemisch aus gleichen Gewichtsteilen an UDMA und D₃MA, oder um aus monofunktionellem Methacrylat BMA. Das Vergleichsbeispiel V2 setzt sich aus einer Mischung von V1 und dem β-Allylsulfon **4**, das als Analogon zur Verbindung **2** eingesetzt wurde, zusammen. V3 bis V12 sind Vergleichsbeispiele aus Methacrylaten (entweder auf UDMA/D3MA- oder BMA-Basis) mit unterschiedlichsten bekannten Reglern, die sich anhand ihrer Abgangsgruppe (Sulfon, Sulfid, Phosphon, Alkyl) bzw. Aktivierungsgruppe (Ester, Amid, aromatisch) unterscheiden. Bei V13 handelt es sich um eine Formulierung mit einem Bartonester als Regler.

**Tabelle 1**

| **Regler** | **Beispiel** | **t₉₅** | **tₘₐₓ** | **Mn_{mod}/Mn_{BMA}** | **DBC_{U/D} // DBC_{BMA}** |
|---|---|---|---|---|---|
| | | **[s]** | **[s]** | **[ ]** | **[%] // [%]** |
| keiner (UDMA/D₃MA bzw. BMA) | V1 | 66,4 | 4,3 | - | 74 // - |
| 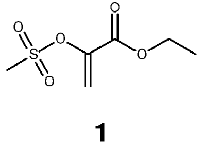 | B1 | 65,6 | 15,3 | 0,20 | 94 // 55 |
| 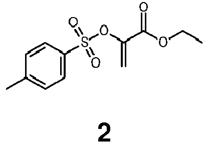 | B2 | 55,6 | 12,1 | 0,12 | 93 // 57 |
| 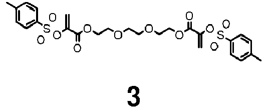 | B3 | 65,0 | 7,5 | 0,32 | 95 // 56 |
| 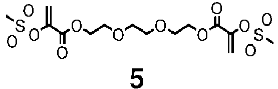 | B4 | 65,0 | 9,2 | 0,30 | 97 // 55 |
| 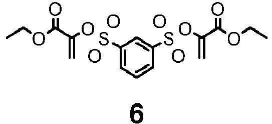 | B5 | 44,3 | 7,8 | 0,22 | 93 // 82 |
| 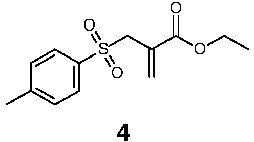 | V2 | 82,6 | 10,2 | 0,18 | 61 // 46 |
| 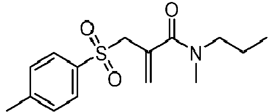 | V3 | 33,2 | 5,1 | 1,16 | 86 // 76 |
| 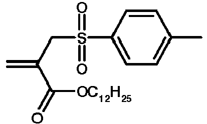 | V4 | 114,3 | 4,1 | 0,20 | 70 // 52 |
| 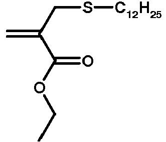 | V5 | 108 | 10,7 | 0,22 | 63 // 36 |
| 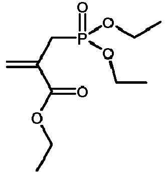 | V6 | 181,2 | 12 | 0,53 | 49 // 17 |
| 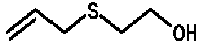 | V7 | 73 | 16,1 | 0,47 | - // 21 |
| 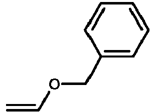 | V8 | 73,2 | 8,1 | 0,66 | - // 16 |
| 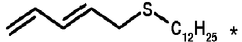 | V9 | 117,8 | 12,3 | 0,40 | - // 13 |
| 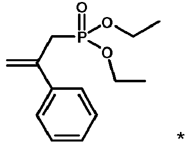 | V10 | 107,8 | 9,9 | 0,49 | - // 15 |
| 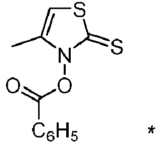 | V11 | 74,5 | 11 | 0,45 | 75 // 46 |
| 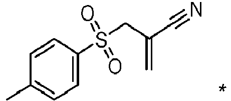 | V12 | 102,1 | 7,8 | 0,51 | 57 // 33 |
| 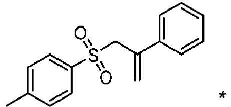 | V13 | 74 | 11,3 | 0,43 | 64 // 26 |

| | | | | | |
|---|---|---|---|---|---|
| * geringe Löslichkeit, daher c = 5 DB% | | | | | |

Aus obiger Tabelle 1 geht klar hervor, dass die Verbindungen **1, 2, 3, 5** und **6** bei erfindungsgemäßer Verwendung als Regler in den Beispielen 1 bis 5 überaschenderweise in der Lage waren, die Zeit t₉₅ bis zum Erreichen von 95 % Umsatz zu verkürzen, was von den Vergleichsbeispielen nur der Verbindung aus Vergleichsbeispiel 3, einem Allylsulfon, gelang. Allerdings erhöhte diese Verbindung das mittlere Molekulargewicht des erhaltenen Polymerisats sogar um 16 %, anstatt die Kettenlänge zu verringern. Im Gegensatz dazu bewirkten die Verbindungen gemäß vorliegender Erfindung eine deutliche Verringerung auf bis zu etwa 1/8 des nicht modifizierten Produkts. Gleichzeitig bewirkten sie jedoch eine Verlängerung der Zeit tₘₐₓ bis zum Erreichen der maximalen Polymerisationsgeschwindigkeit, mitunter auf das 3- bis 4fache (Beispiele 1 und 2), was vorteilhaft ist, da es so erst viel später zum Gelieren des Reaktionsgemischs kommt, so dass die Polymerisation länger ungehindert unter im Wesentlichen homogenen Bedingungen ablaufen kann. Eine solche wünschenswerte Kombination von Eigenschaften zeigte kein einziges der Vergleichsbeispiele. Da die aus Moad et al. (s.o.) bekannte Verbindung **4** in Vergleichsbeispiel 2 diesbezüglich am besten abschnitt, wurde diese in der Folge für weitere Vergleiche mit den Sulfonsäureestern zur erfindungsgemäßen Verwendung herangezogen.

### Beispiele 6 und 7, Vergleichsbeispiele 14 und 15

### Herstellung und Charakterisierung von Photopolymeren mit Methacrylat-Monomeren

Ähnlich wie in den obigen Beispielen wurden Harzformulierungen, bestehend aus einem äquimolaren Gemisch von UDMA und D₃MA (Vergleichsbeispiel 14) und dem jeweiligen Regler hergestellt. Da sich in den bisherigen Beispielen die Verbindungen **1** und **2** als derzeit beste Regler gemäß vorliegender Erfindung herausgestellt hatten, wurde in weiteren Versuchen vorerst nur diese Verbindungen mit der besten Vergleichssubstanz nach dem Stand der Technik, Verbindung **4**, verglichen. Somit wurden dem obigen UDMA-D₃MA-Basisgemisch jeweils rund 0,20 Doppelbindungsäquivalente der Verbindungen **1** (Beispiel 6), **2** (Beispiel 7) und **4** (Vergleichsbeispiel 15) zugesetzt. Allen Formulierungen wurde zusätzlich ~ 1 Gew.-% MBDEGe als Photoinitiator zugesetzt. Zur Überprüfung der Photoreaktivität wurden die hergestellten Formulierungen mit einem Photorheometer MCR302 WESP von Anton Paar vermessen, das zur Umsatzkontrolle mit einem Bruker Vertex-80-IR-Spektrometer gekoppelt wurde. Es wurde ein PP-25-Messsystem verwendet, und der Messspalt wurde auf 0,1 mm eingestellt. Vor und während der Aushärtung (3 W/cm²; 320-500 nm; Omnicure 2000) wurden Speicher- und Verlustmodul der Proben im Oszillationsmodus (1 % Auslenkung, 1 Hz) gemessen. Gleichzeitig wurden während der Messung IR-Spektren der Probe mit einer Frequenz von ~ 5 Hz aufgezeichnet. Als Maß für die Photoreaktivität wurde das Erreichen des Gelpunkts (Schnittpunkt von Speicher- und Verlustmodul) und erneut die Dauer bis zum Erreichen von 95 % des Gesamtumsatzes (t_{95%}) herangezogen. Zusätzlich wurden der Umsatz am Gelpunkt (DBCg), der Gesamtumsatz (DBC) und die photopolymerisationsinduzierte Schrumpfungsspannung (F_{S} bzw. F_{S(75%)}, d.h. F_{S} bei 75 % Umsatz) ermittelt. Die erzielten Ergebnisse sind in Tabelle 2 zusammengefasst

**Tabelle 2: RT-NIR-Photorheometrie**

| **Beispiel** | **Regler** | **Gelpunkt** | **DBC_{g}** | **DBC** | **t_{95%}** | **F_{S(75%)}** | **F_{S}** |
|---|---|---|---|---|---|---|---|
| | | **[s]** | **[%]** | **[%]** | **[s]** | **[N]** | **[N]** |
| V14 | - | 2,1 | 41 | 79 | 69,0 | -14,9 | -17,9 |
| B6 | **1** | 10,4 | 46 | 95 | 48,2 | -9,9 | -19,5 |
| B7 | **2** | 7,9 | 56 | 93 | 25,9 | -8,8 | -15,6 |
| V15 | **4** | 12,4 | 38 | 76 | 110,5 | -9,7 | -12,0 |

Man erkennt, dass durch den Zusatz aller drei Regler die Zeit bis zum Erreichen des Gelpunkts verlängert wurde. Allerdings wurden bei der erfindungsgemäßen Verwendung der Sulfonsäureester **1** und **2** in den Beispielen 6 und 7 sowohl der Umsatz am Gelpunkt als auch insbesondere der Gesamtumsatz gegenüber Vergleichsbeispiel 14 erhöht - letzterer sogar erheblich auf über 90 % -, während mit dem bekannten Regler in Vergleichsbeispiel 15 sogar ein leichter Umsatzrückgang verzeichnet wurde. Aus dem um 16 Prozentpunkte erhöhten Gesamtumsatz in Beispiel 6 resultiert auch ein dementsprechende geringfügige Erhöhung der Schrumpfspannung der Polymerisats. Der Vergleich der Schrumpfspannungen bei 75 % Umsatz zeigt jedoch, dass bei gleichem Umsatz alle drei Regler eine deutliche Reduktion der Schrumpfspannung bewirken. Weiters wird die Zeit bis zum Erreichen von 95 % Umsatz mit den Reglern gemäß vorliegender Erfindung deutlich verkürzt, während sie bei Verwendung von Verbindung **4** in Vergleichsbeispiel 15 sogar um mehr als 50 % zunimmt. Somit sind die Verbindungen **1** und (vor allem) **2** der Vergleichssubstanz **4** in mehrerlei Hinsicht überlegen.

### Beispiele 8 und 9, Vergleichsbeispiele 16 und 17

### DMTA-Analyse der hergestellten Photopolymere

Zur Untersuchung des Glasübergangs wurden analog zu den obigen Beispielen 6 und 7 bzw. Vergleichsbeispielen 14 und 15 hergestellte Formulierungen in Silikon-formen gegossen und in einem Lichtofen (Modell Lumamat 100, Ivoclar AG) mit dem Programm 2 (10 min Bestrahlung mit einer Intensität von ca. 20 mW/cm²) polymerisiert. Die Stäbe wurden gewendet und abermals ausgehärtet. Die Probestäbchen wurden geschliffen und dann auf einem Anton Paar-Rheometer MCR301 mit einem CTD- (Convection Temperature Control) Ofen und einer eingesetzten Festkörpereinspannvorrichtung (SRF12 für rechteckige Querschnitte bis 12 mm) vermessen. Die eingestellte Heizrate betrug 2 °C/min. Alle Proben wurden von -100 °C auf 200 °C aufgeheizt und mit einer konstanten Frequenz von 1 Hz und 0,1 % Auslenkung oszilliert. In nachstehender Tabelle 3 sind die Ergebnisse für die Bestimmung des Speichermoduls bei Raumtemperatur (G'_{(20°C)}), der Glasübergangstemperatur (T_{G}) und der Halbwertsbreite der Verlustfaktorkurve beim Glasübergang (HWB) angegeben.

**Tabelle 3: DMTA**

| **Beispiel** | **Regler** | **G'_{(20°C)}** | **T_{G}** | **HWB** |
|---|---|---|---|---|
| | | **[MPa]** | **[°C]** | **[°C]** |
| V16 | - | 940 | 150 | 146 |
| B8 | **1** | 999 | 69 | 23 |
| B9 | **2** | 1020 | 68 | 25 |
| V17 | **4** | 810 | 72 | 23 |

Die in Tabelle 3 gezeigten Messwerte zeigen, dass durch Zugabe von Reglern ein niedrigerer und deutlich schmalerer Glasübergangsbereich erreicht wurde. Die Wirkung der drei Regler ist unter diesen Gesichtspunkten nahezu vergleichbar: Bei erfindungsgemäßer Verwendung der Verbindungen **1** und **2** als Regler wird der Speicher-modul bei Raumtemperatur allerdings (zumindest geringfügig) erhöht, während ihn Vergleichsverbindung **4** herabsetzt. Auch in dieser Hinsicht liefert also die vorliegende Erfindung bessere Ergebnisse als der Stand der Technik.

### Beispiele 10 und 11, Vergleichsbeispiele 18 und 19

### Messung der Schlagzähigkeit (Dynstat-Impact-Test)

Die Ermittlung der Zähigkeitseigenschaften erfolgte mittels der DYNSTAT-Anordnung entsprechend der DIN 53435, wobei die Schlagzähigkeit (Schlagarbeit) von ungekerbten Prüfkörpern in der Schlagbiegeanordnung ermittelt wurde. Zu diesem Zweck wurden Probestäbe (1 x 0,45 x 0,15 cm) aus zu den obigen Beispielen 6 und 7 bzw. Vergleichsbeispielen 14 und 15 analogen Formulierungen hergestellt und Dynstat-Impact Tests unter Verwendung eines 5-kpcm-Hammers; 0,5 J) durchgeführt. In der nachstehenden Tabelle 4 sind die dabei erzielten Werte aufgelistet.

**Tabelle 4**

| **Beispiel** | **Verbindung** | **Schlagarbeit [kJ/m²]^{a)}** |
|---|---|---|
| V18 | - | 2,4 ± 0,4 |
| B10 | **1** | 11,3 ± 1,7 |
| B11 | **2** | 17,4 ± 1,1 |
| V19 | **4** | 6,1 ± 1,75 |

| | | |
|---|---|---|
| a) Normiert auf Breite und Dicke | | |

Es ist ersichtlich, dass durch alle drei Regler eine deutliche Schlagzähigkeitserhöhung erzielt werden konnte, wobei mit den Verbindungen **1** und **2** in den Beispielen 10 und 11 der Erfindung Zunahmen auf das 4,7- bzw. 7,25fache beobachtet wurden, während Vergleichsverbindung **4** nur eine Steigerung auf das 2,5fache bewirkte.

### Beispiel 12, Vergleichsbeispiele 20 und 21

### Herstellung und Charakterisierung von Photopolymeren mit Divinylester-Monomer

Verbindung 2 als (derzeit) bester Regler gemäß vorliegender Erfindung wurde in diesem Fall mit der besten Vergleichssubstanz nach dem Stand der Technik, Verbindung 4, bei der Polymerisation eines Vinylestermonomersverglichen, nämlich bei der Polymerisation von Glucitoldivinyladipat (GDVA):

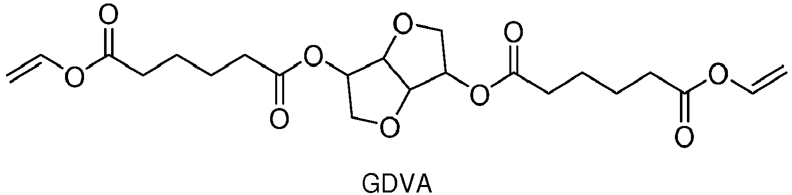

Zu diesem Zweck wurden Formulierungen mit GDVA-Monomer alleine (Vergleichsbeispiel 20) sowie mit jeweils 24 Gew.-% der Verbindung **2** (Beispiel 12) bzw. **4** (Vergleichsbeispiel 21) hergestellt. Alle drei Formulierungen enthielten zusätzlich - 0,5 Gew.-% Ivocerin (Ivoclar Vivadent) als Photoinitiator. Die Überprüfung der Photoreaktivität erfolgte analog zu den obigen Beispielen 6 und 7 bzw. Vergleichsbeispielen 14 und 15. Als Maß für die Photoreaktivität wurden wiederum die Zeit bis zum Erreichen des Gelpunkts (Schnittpunkt von Speicher- und Verlustmodul) und die Dauer bis zum Erreichen von 95 % des Gesamtumsatzes (t_{95%}) herangezogen. Zusätzlich wurden erneut der Umsatz am Gelpunkt (DBCg), der Gesamtumsatz (DBC) und die photopolymerisationsinduzierte Schrumpfungsspannung (F_{S} bzw. F_{S(75%)}, d.h. F_{S} bei 75 % Umsatz) ermittelt. Die erhaltenen Ergebnisse sind in Tabelle 5 zusammengefasst.

**Tabelle 5: RT-NIR-Photorheometrie**

| **Beispiel** | **Regler** | **Gelpunkt** | **DBC_{g}** | **DBC** | **t_{95%}** | **F_{s(75%)}** | **Fₛ** |
|---|---|---|---|---|---|---|---|
| | | **[s]** | **[%]** | **[%]** | **[S]** | **[N]** | **[N]** |
| V20 | - | 2 | 13 | 76 | 66 | -12,7 | -20,5 |
| B12 | **2** | 26 | 45 | 75 | 165 | -4,4 | -10,0 |
| V21 | **4** | - | - | 21 | 59 | - | - |

Ähnlich wie bei der Photopolymerisation von Di(meth)acrylaten kommte es auch bei der Homopolymerisation des Divinylesters GDVA zu einer rapiden Gelbildung, was bei der Reaktion ohne Regler in Vergleichsbeispiel 16 zu hoher Schrumpfungsspannung des Polymerisats (-20,5 N) und geringen Doppelbindungsumsätzen (~ 76 %) führt. Es ist klar ersichtlich, dass durch Verbindung **4** in Vergleichsbeispiel 21 die Photopolymerisation von Vinylestern inhibiert wird. Der Gelpunkt konnte während der gesamten Polymerisationsdauer (5 min) nicht erreicht werden, und der Umsatz betrug lediglich ~ 21 %. Ohne sich auf eine bestimmte Theorie festlegen zu wollen, nehmen die Erfinder an, dass der Grund dafür die höhere Additionskonstante von Radikalen an die Doppelbindung der Verbindung **4** gegenüber Vinylester-Doppelbindungen ist. Mit Verbindung **2** konnte in Beispiel 12 die Vinylester-Homopolymerisation hingegen gut geregelt werden, und es wurde eine stark reduzierte Schrumpfungsspannung bei gleichbleibendem Umsatz erzielt. Dies ist wohl darauf zurückzuführen, dass der Umsatz am Gelpunkt (DBC_{g}) mit 45 % bereits relativ hoch war und das Material bis zum Gelpunkt relaxieren konnte (Schrumpfungsspannung tritt erst nach Erreichen des Gelpunkts auf). Durch den erfindungsgemäßen Einsatz von Verbindung **2** kommt es bei der Vinylester-Polymerisation zwar auch zu einer Verlängerung der gesamten Reaktionsdauer (vgl. t₉₅), was jedoch durch die deutlich verbesserte Schrumpfungsspannung kompensiert wird.

### Beispiel 13, Vergleichsbeispiel 22

### Messung der Schlagzähigkeit (Dynstat-Impact-Test)

Die Ermittlung der Zähigkeitseigenschaften erfolgte analog zu den Beispielen 10 und 11. In der nachstehenden Tabelle 6 sind die erhaltenen Werte für Formulierungen mit GDVA-Monomer alleine (Vergleichsbeispiel 22) sowie mit 24 Gew.-% der Verbindung **2** (Beispiel 13) aufgelistet.

**Tabelle 6**

| **Beispiel** | **Regler** | **Schlagarbeit** |
|---|---|---|
| | | **[kJ/m²]^{a)}** |
| V22 | - | 5,1 ± 1,0 |
| B13 | **2** | - |

Nur die Probenkörper aus reinem GDVA konnten mit dieser Prüfanordnung zerbrochen werden während die gemäß vorliegender Erfindung hergestellten Prüfkörper mit 24 Gew.-% der Verbindung **2** so hohe Zähigkeit aufwiesen, dass sie den Schlagbiegeversuch unbeschadet überstanden.

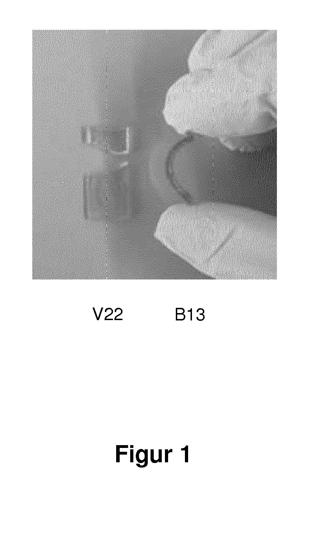

Zur Interpretation dieses Ergebnisses wurden die beiden erhaltenen Photopolymere händisch gebogen. Homopolymere aus GDVA waren sehr spröde und brachen relativ leicht, erfindungsgemäße Polymerisate mit Verbindung **2** ließen sich hingegen verbiegen, ohne zu brechen, wie dies in Fig. 1 für ein Polymerisat aus Vergleichsbeispiel 22 (links) und eines aus Beispiel 13 (rechts) dargestellt ist.

### Beispiel 14, Vergleichsbeispiele 23 und 24

### Herstellung und Charakterisierung von Gelen mit Polyethylenglykoldiacrylat

Es wurden Formulierungen mit Polyethylenglykoldiacrylat (PEGDA, Mw ~ 750 g/mol) alleine (Vergleichsbeispiel 23) und mit jeweils 19 Gew.-% der Verbindungen **2** (Beispiel 14) bzw. **4** (Vergleichsbeispiel 24) hergestellt. Alle Formulierungen enthielten zusätzlich ~ 0,5 Gew.-% Ivocerin als Photoinitiator. Die hergestellten Harzformulierungen wurden mit 60 Gew.-% Dimethylsulfoxid (DMSO) vermischt, und zur Überprüfung der Photoreaktivität wurden diese Formulierungen analog zu Beispiel 6 mit dem Photorheometer MCR302 WESP von Anton Paar vermessen, das zur Umsatzkontrolle mit einem Bruker Vertex-80-IR-Spektrometer gekoppelt wurde. Die dabei erzielten Ergebnisse sind in Tabelle 7 angeführt.

**Tabelle 7: RT-NIR-Photorheometrie**

| **Beispiel** | **Regler** | **Gelpunkt** | **DBC_{g}** | **DBC** | **F_{S}** |
|---|---|---|---|---|---|
| | | **[s]** | **[%]** | **[%]** | **[N]** |
| V23 | - | 66 | >99 | >99 | -6,6 |
| B14 | **2** | 70 | 88 | >99 | -4,5 |
| V24 | **4** | 205 | 41 | 48 | -0,2 |

Ähnlich wie bei der Photopolymerisation von Di(meth)acrylaten ohne DMSO kommt es auch bei der Homopolymerisation von PEGDA zu einer rapiden Gelbildung, was bei ungeregelter Reaktion in Vergleichsbeispiel 23 zu hoher Schrumpfungsspannung (-6,6 N), allerdings auch nahezu quantitativen Umsätzen (> 99%) führt. Es ist klar ersichtlich, dass durch Verbindung **4** auch die Photopolymerisation von Acrylat-basier-ten DMSO-Gelen inhibiert wird. Der Gelpunkt wird mit >200 s erst sehr spät erreicht, und der Umsatz ist mit unter 50 % sehr gering, was auch die sehr geringe Schrumpfspannung erklärt. Mit Verbindung **2** kann gemäß vorliegender Erfindung die PEGDA-Polymerisation in DMSO gut geregelt werden, und es kommt zu einer stark reduzierten Schrumpfungsspannung bei gleichbleibendem hohem Umsatz.

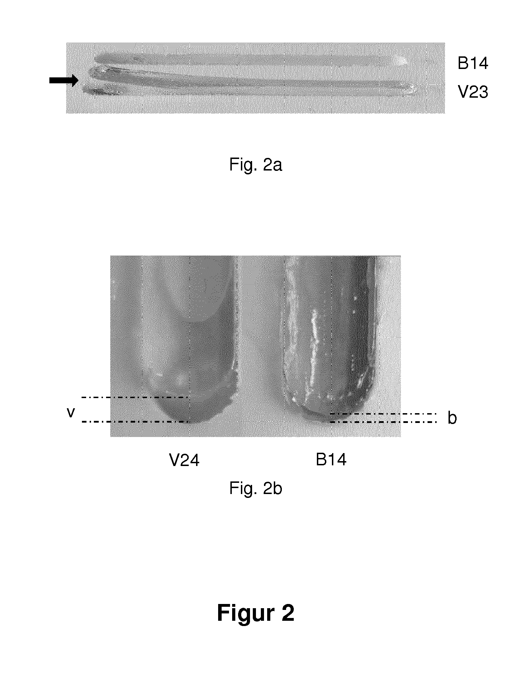

Die gemessene reduzierte Schrumpfungsspannung nach Zusatz von Verbindung **2** wurde auf folgende Weise illustriert: Es wurde eine optische Analyse des Polymerisationsschrumpfes durchgeführt, wozu die DMSO-basierten PEGDA-Formulierungen mit Verbindung **2** als Regler in eine Teflonform gegossen und im Lumamat 100 für 10 min bestrahlt wurden. Fig. 2 zeigt die so erhaltenen Gele.

In den beiden Fotos in Fig. 2 ist zu erkennen, dass sich das ohne Regler hergestellte Gel aus Vergleichsbeispiel 23 krümmt (Fig. 2a, unten; durch den Pfeil angezeigt) und das mit Verbindung **4** hergestellte Gel aus Vergleichsbeispiel 24 seine Länge gegenüber jenem aus Vergleichsbeispiel 23 stark verkürzt (Fig. 2b, links; Längendifferenz "v"). Das erfindungsgemäß mit Verbindung 2 als Regler hergestellte Gel (Fig. 2a, oben; Fig. 2b, rechts) aus Beispiel 14 schrumpfte aufgrund der reduzierten Schrumpfungsspannung während der Polymerisation hingegen kaum (Längendifferenz "b").

### Beispiel 15, Vergleichsbeispiele 25 und 26

### Herstellung und Charakterisierung von Beschichtungen mit Urethandiacrylat

Es wurden Formulierungen mit dem Urethandiacrylat (UDA) Ebecryl 2002 von Sartomer alleine (Vergleichsbeispiel 25) und mit jeweils 20 Gew.-% der Verbindungen **2** (Beispiel 15) bzw. **4** (Vergleichsbeispiel 26) hergestellt. Alle Formulierungen enthielten zusätzlich ~ 1 Gew.-% Darocur 1173 (BASF) als Photoinitiator. Zur Überprüfung der Photoreaktivität wurden diese Formulierungen analog zu den Beispielen 6 und 7 mit dem Photorheometer MCR302 WESP von Anton Paar vermessen, das zur Umsatzkontrolle mit einem Bruker Vertex-80-IR-Spektrometer gekoppelt wurde. Die dabei erzielten Ergebnisse sind in Tabelle 8 angeführt.

**Tabelle 8: RT-NIR-Photorheometrie**

| **Beispiel** | **Regler** | **t₉₅** | **DBC** | **Fₛ** |
|---|---|---|---|---|
| | | **[s]** | **[%]** | **[N]** |
| V25 | - | 69 | 96 | -7,6 |
| B15 | **2** | 116 | 99 | -0,2 |
| V26 | **4** | 185 | 73 | -5,2 |

Man erkennt aus Tabelle 8, dass das erfindungsgemäße Polymerisat aus Beispiel 15 gegenüber dem ohne Regler hergestellten Produkt von Vergleichsbeispiel 25 den ohnehin hohen Umsatz sogar noch weiter steigern konnte, vor allem aber nahezu keinen Schrumpf aufwies. Mit Verbindung **4** als Regler in Vergleichsbeispiel 26 war der Umsatz deutlich geringer als ohne Regler, und die Schrumpfung konnte nur wenig gesenkt werden. Zudem erhöhte Verbindung **4** im Vergleich zu Verbindung **2** im erfindungsgemäßen Beispiel die Reaktionsdauer beträchtlich, d.h. um das 2,7-fache der Polymerisation ohne Regler, während sie in Beispiel 15 nur auf das 1,7fache anstieg.

### Beispiele 16 und 17, Vergleichsbeispiele 27 bis 29

### Gitterschnitttest von Beschichtungen nach DIN EN ISO 2409

Eine anodisierte Aluminiumfolie wurde mit analog zu den obigen Beispielen mit UDA als Monomer und 10 bzw. 20 Gew.-% hergestellten Formulierungen beschichtet (4-mil-Rakel, ~ 102 µm) und in einem UV-Ofen ausgehärtet. Die Beschichtungen wurden mittels Gitterschnittprüfer (6 x 2 mm) geschnitten und dann gleichmäßig Klebeband (Tesafilm Standard 19 mm) über die geschnittenen Beschichtungen geklebt. Die Klebebänder wurden gleichmäßig in einem Winkel von ~ 60° abgezogen, und das Erscheinungsbild der zurückbleibenden Gitter wurde beurteilt. Tabelle 9 zeigt die dabei erzielten Ergebnisse.

**Tabelle 9: Gitterschnittest**

| **Beispiel** | **Regler** | **Menge** | **Kennwert ISO** |
|---|---|---|---|
| V27 | - | - | GT 3 |
| B16 | **2** | 10 Gew.-% | GT 1 |
| B17 | **2** | 20 Gew.-% | GT 1 |
| V28 | **4** | 10 Gew.-% | GT 1 |
| V29 | **4** | 20 Gew.-% | GT 1 |

Die UDA-basierte Beschichtung ohne Regler aus Vergleichsbeispiel 27 wies etliche abgeplatzte Quadrate auf, wohingegen bei allen mit Regler hergestellten Beschichtungen - sowohl mit 10 Gew.-% als auch mit 20 Gew.-% Regler - nur kleine Splitter der Beschichtung an den Schnittpunkten und Schnitträndern der Gitterlinien abgeplatzt waren. Die Wirkung der Verbindungen **2** und **4** als Regler war in dieser Hinsicht gleichwertig.

### Beispiel 18, Vergleichsbeispiel 30

### Homo- und Copolymerisationsversuche mit Verbindung 2

Es wurde untersucht, ob eine Homopolymerisation von Verbindungen der Formeln 1 und 2 über Sulfonylradikale möglich ist, wie dies die eingangs zitierte US 2.694.699 in den dortigen Beispielen 3 bis 5 für drei verschiedene α-Sulfonyloxyacrylate (zu angeblich "hochmolekularen Harzprodukten") beschreibt.

Dazu wurden Polymerisationsversuche von Verbindung **2** mit 1 Gew-% Ivocerin^{®} als Photoinitiator (Vergleichsbeispiel 30) sowie von Benzylmethacrylat (BMA) mit 28 Gew-% (20 Mol-%) von Verbindung **2** und ebenfalls 1 Gew-% Ivocerin^{®} als Photoinitiator (Beispiel 18) mittels Photo-DSC unternommen (5 min gefiltertes UV-Licht, 400-500 nm, Omnicure 2000) und die zugehörigen NMR-Spektren ausgewertet.

Das nachstehende Schema 1 zeigt die mittels NMR bestätigte Reaktionsabfolge für die Reaktion ohne BMA in Vergleichsbeispiel 30.

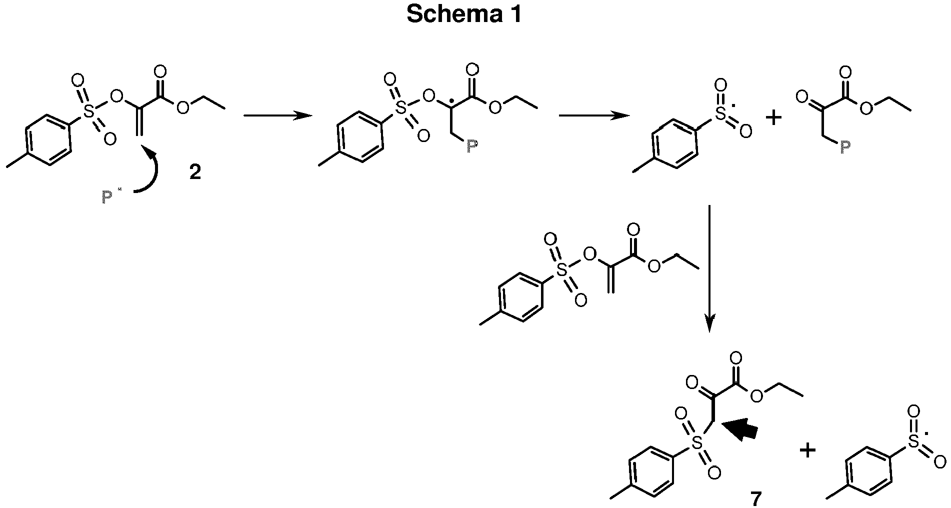

Es kommt somit nach der Initiierung mittels eines Initiatorradikals P· zu einer Fragmentierung des Reglermoleküls, was ein Tosylradikal und einen mit dem Initiatorrest substituierten Brenztraubensäureester ergibt. Das Tosylradikal initiiert jedoch ebenfalls keine Homopolymerisation der Vinylgruppe der Sulfonsäurevinylester-Gruppierung von Verbindung **2**, sondern eine erneute Fragmentierung zu einem substituierten Brenztraubensäureester und einem weiteren Tosylradikal. Das Hauptprodukt der Reaktion ist somit der tosylierte Brenztraubensäureethylester **7** und keinerlei Polymerisat, geschweige denn ein "hochmolekulares Harzprodukt", wie dies in US 2.694.699 behauptet wird.

Sulfonatester-Verbindungen der Formeln **1** und 2 sind somit zu keinerlei Homopolymerisation in der Lage, da ihre vinylische bzw. acrylische Doppelbindung keine Kettenwachstumsreaktion eingeht, sondern bereits davor eine Fragmentierung des Moleküls unter homolytischer Spaltung der S-O-Bindung und daraus resultierender Verlagerung der Radikalposition von C zu S erfolgt.

Für die mit Pfeil gekennzeichnete Methylengruppe von **7** findet sich in der Literatur (Andreichikov et al., Zh. Org. Khim. 13, 2070 (1977)) eine chemische Verschiebung von δ = 4,48 ppm, die auch im ¹H-NMR-Spektrum des Produkts von Vergleichsbeispiel 26 klar zu erkennen war. Mittels Integral wurde das Vorliegen von etwa 99 % der Verbindung **7** im Reaktionsprodukt bestätigt.

Bei Zusatz eines ethylenisch polymerisierbaren Monomers wie Benzylmethacrylat (BMA) kommt es hingegen sehr wohl zu einer Kettenwachstumsreaktion der acrylischen Vinylgruppe gemäß nachstehendem Schema 2.

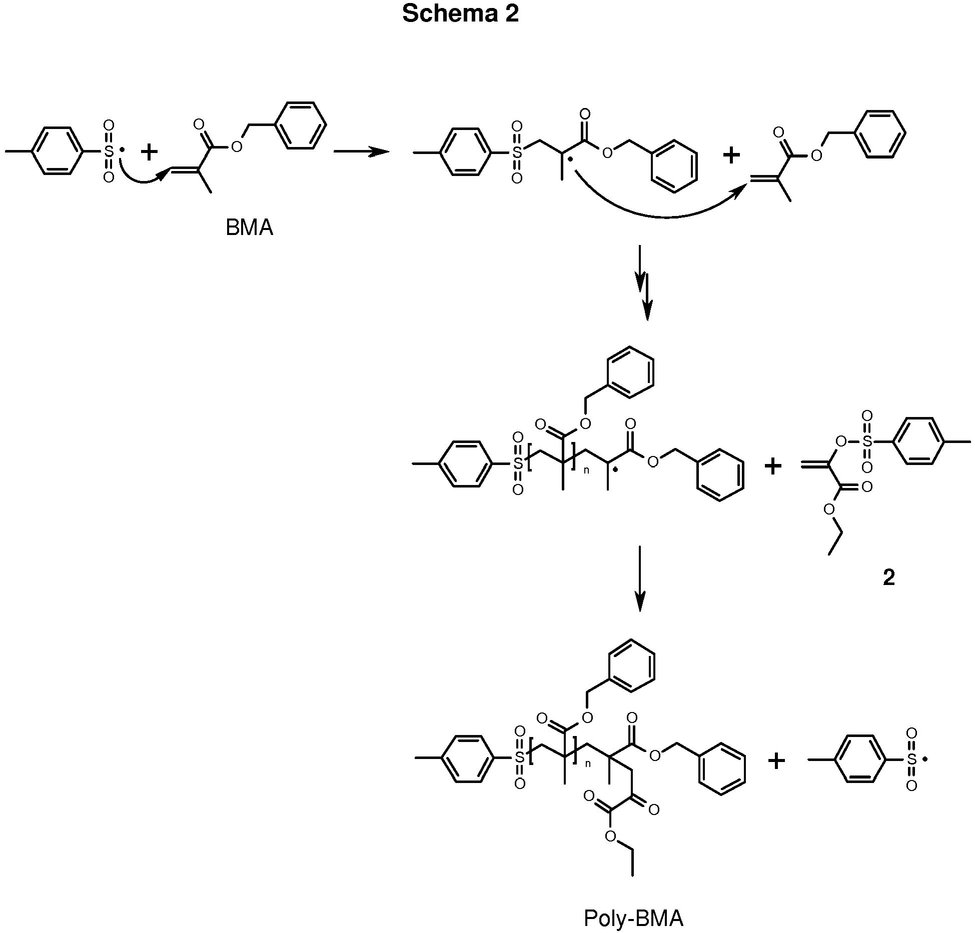

Das fragmentierte Reglermolekül startet somit einerseits das Kettenwachstum der Acrylatmonomere, terminiert es allerdings auch durch eine Übertragungsreaktion. Das gewichtsmittlere Molekulargewicht des in Beispiel 18 erhaltenen Polymerisats betrug in diesem Versuch etwa 1500 g/mol, was einem Wert für n im obigen Schema von etwa 6 entspricht. Dieser Wert lässt sich freilich durch geeignete Wahl der Mengenverhältnisse entsprechend steuern.

Auch hier nimmt die Vinylgruppe des Reglers **2** nicht an der Kettenwachstumsreaktion der Acrylatmonomere teil, sondern wird im Zuge der Fragmentierung des Moleküls wiederum in eine Ketogruppe umgewandelt, wobei ein Fragment des Regler-moleküls die Kette terminiert und das andere (das Sulfonylradikal) durch Anlagerung an ein BMA-Molekül eine weitere wachsende Kette erzeugt.

In den in US-Patent 2.694.699 offenbarten Copolymerisationsversuchen (siehe die dortigen Beispiele 7 bis 9) soll - im Gegensatz zur vorliegenden Erfindung - das Sulfonyloxyacrylat nicht als Regler, sondern (vermeintlich) als Comonomer dienen, weswegen es in allen drei Beispielen in Molverhältnissen zwischen Sulfonyloxyacrylat (α-Benzolsulfonyloxyacrylsäureethylester oder α-Methansulfonyloxyacrylsäureethylester, d.i. die Verbindung **1**) und dem tatsächlichen Monomer (Methylacrylat, Methylmethacrylat, Styrol, Acrylnitril) von etwa 1:1 eingesetzt wurde.

Bei den dabei erhaltenen Produkten kann es sich gemäß dem hierin aufgeklärten Reaktionsmechanismus lediglich um einzelne, mit dem jeweiligen Sulfonyloxyacrylat terminierte, d.h. davon "umschlossene" Monomere oder bestenfalls äußerst kurzkettige Oligomere mit einem n in obigem Schema 2 von 0 bis 2 handeln. Die Charakterisierung und "Aufklärung" der Struktur konnte vor dem Einreichdatum der zugehörigen Patentanmeldung anno 1952 allerdings bloß anhand von Elementaranalysen erfolgen, da einerseits NMR-Spektrometer noch völlig ungebräuchlich und andererseits Gelpermeationschromatographie- und exakte Massenspektrometrieverfahren für organische Verbindungen unter schonender Ionisation (FT-ICR-, CI-, ESI- oder MALDI-MS) noch gar nicht erfunden waren. Die im US-Patent angegebenen, aus den Elementaranalysen berechneten Daten für die Mol- bzw. Gewichtsverhältnisse in den Produkten der Beispiele 7 bis 9 des US-Patents bestätigen jedoch die Erkenntnisse der Erfinder des vorliegenden Anmeldungsgegenstandes.

Offenkundig wurde seinerzeit nicht erkannt, dass es sich bei den im US-Patent offenbarten Sulfonyloxyacrylaten um ausgezeichnete Polymerisationsregler handelt, die folglich aber zur eigentlichen Copolymerisation *de facto* ungeeignet sind. Aufgrund des durchwegs eingesetzten Molverhältnisses von etwa 1:1 konnte dieser Umstand 1952 - in Ermangelung eines zuverlässigen Verfahrens zur Molekulargewichtsbestimmung organischer Moleküle - auch gar nicht erkannt werden können.

### Beispiele 19 bis 21, Vergleichsbeispiel 31

### 3D-Druck

Für den 3D-Druck wurden Reaktionsgemische auf Basis eines aliphatischen Polyesterurethanmethacrylats (Bomar XR 741) mit 1 Gew.-% Ivocerin^{®} als Photoinitiator hergestellt. Als Regler wurden 5, 7 bzw. 10 Gew.-% von Verbindung **2** zugemischt. Gemäß einer Literaturvorschrift (Liska et al., J. Polym. Sci. A Polym. Chem. 49, 4927-4934 (2011)) wurden dann Probestäbe vom Typ 5B nach DIN EN ISO 527-2 gedruckt und Zugversuche auf einer Zwick-500-Zugprüfmaschine durchgeführt. Die in Tabelle 10 angebenenen Ergebnisse stellen jeweils Mittelwerte von zumindest 6 Messungen dar.

**Tabelle 10: Bruchdehnung von 3D-Drucken**

| **Beispiel** | **Regler** | **Menge [Gew.-%]** | **Bruchdehnung [%]** |
|---|---|---|---|
| V31 | - | - | 5,01 |
| B19 | **2** | 5 | 7,12 |
| B20 | **2** | 7 | 8,78 |
| B21 | **2** | 9 | 12,32 |

Es ist klar zu erkennen, dass sich die Bruchdehnung durch erfindungsgemäßen Zusatz von Regler **2** in zunehmender Menge kontinuierlich verbesserte.

### Beispiele 22 und 23, Vergleichsbeispiel 32

### Oberflächenuntersuchungen

Es wurden Monomerengemische (Harzmischung 2M) analog zu den Beispielen 1 und 2 ohne Regler (Vergleichsbeispiel 32) sowie mit 20 Gew.-% von Verbindung **1** (Beispiel 22) und 26 Gew.-% von Verbindung **2** (Beispiel 23) hergestellt. Zur Ermittlung des Gefügebildes wurden die hergestellten Formulierungen in Silikonformen gegossen und in einem Lichtofen (Modell Lumamat 100, Ivoclar AG) mit dem Programm 2 (P2: 10 min Bestrahlung mit einer Intensität von ca. 20 mW/cm²) polymerisiert. Die Stäbe (~ 1 x 0,45 x 0,15 cm) wurden gewendet und abermals gemäß P2 ausgehärtet. Die Probestäbchen wurden geschliffen und dann mittels einer DYNSTAT-Anordnung entsprechend der DIN 53435, wobei die Prüfkörper ungekerbt waren, unter Verwendung eines 5-kpcm- Hammers analog zu den Beispielen 3 und 4 geprüft. Die Bruchflächen wurden anschließend mittels REM auf einem SEM XL-30 von Philips analysiert. Dafür wurden die Proben auf einem Probenhalter mit Tape fixiert und die Ränder mit einer leitenden Silberlösung bestrichen. Anschließend wurden die Proben mit einer dünnen leitenden Goldschicht besputtert. Es wurden Bilder der Bruchflächen in 500facher Vergrößerung aufgenommen.

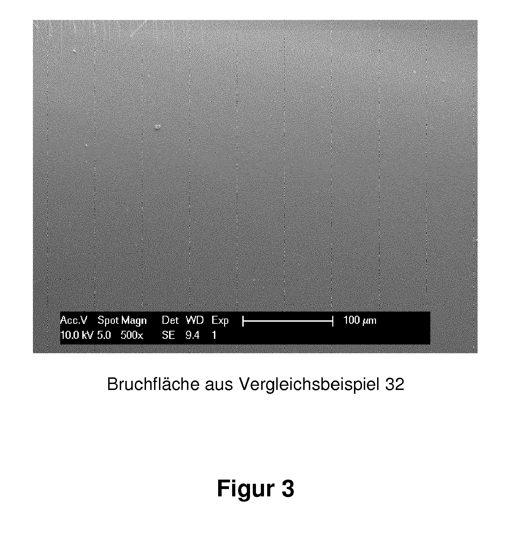

Fig. 3 zeigt die Bruchfläche des Polymerisats aus Vergleichsbeispiel 32, das ohne Reglerzusatz hergestellt worden war: eine äußerst glatte Bruchfläche, die somit einen spröden Bruch anzeigt.

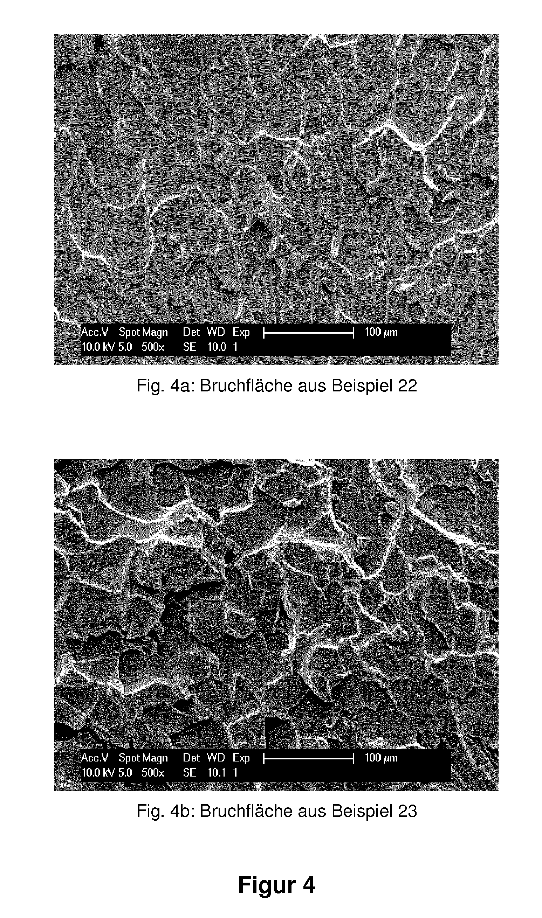

In Fig. 4 sind die Bruchflächen der erfindungsgemäßen Polymerisate aus Beispiel 22 (Fig. 4a) und Beispiel 23 (Fig. 4b) zu sehen, die wesentlich duktiler sind als das ungeregelte Dimethacrylatnetzwerk.

### Beispiele 24 und 25, Vergleichsbeispiele 33 und 34

### Molekulargewichtsbestimmung

Es wurden Polymerisationen analog zu den Beispielen 1 und 2 bzw. Vergleichsbeispielen 1 und 2 mit BMA ohne Regler (Vergleichsbeispiel 33) sowie mit 22 Gew.-% von Verbindung 1 (Beispiel 24), 28 Gew.-% von Verbindung 2 (Beispiel 25) und 28 Gew.-% von Verbindung 4 (Vergleichsbeispiel 34) hergestellt, in THF gelöst und mit einer Waters GPC mit drei in Serie geschalteten Säulen (Styragel HR 0.5, Styragel HR 3 und Styragel HR 4) und einem Waters 2410 RI-Detektor in einem Säulenofen bei 40 °C und mit einer Flussrate von 1,0 ml/min un ter Verwendung von Polystyrolstandards analysiert, wobei das Molekulargewicht (in kDa) und der Polydispersitäts-index (PDI) bestimmt wurden. Die Ergebnisse sind in Tabelle 11 angeführt.

**Tabelle 11: Molekulargewichtsbestimmung**

| **Beispiel** | **Regler** | **Mn** | **PDI** |
|---|---|---|---|
| | | **[kDa]** | **[ ]** |
| V33 | - | 7,0 | 2,2 |
| B24 | **1** | 1,4 | 1,3 |
| B25 | **2** | 1,1 | 1,3 |
| V34 | **4** | 1,3 | 1,3 |

Die erhaltenen Werte, die gut mit jenen aus Tabelle 1 korrelieren, zeigen, dass die Polymerisation unter Zusatz der drei Regler zu deutlich kürzeren Ketten als bei der ungeregelten Reaktion führte. Darüber hinaus erwies sich erwartungsgemäß auch die Molekulargewichtsverteilung nach Reglerzusatz als erheblich gleichmäßiger. Verbindung **2** wurde erneut als wirksamster der drei getesteten Regler bestätigt.

### Beispiele 26 bis 30

### Exemplarische Reaktionsgemische zur Herstellung von Polymerisaten der Erfindung

Die vorliegende Erfindung der Verwendung von Reglern der Formel 1 und/oder 2 eignet sich zur Herstellung diversester Polymerisate, wie bereits zuvor besprochen. Nachstehend folgt eine allgemeine Anleitung zur Herstellung von Formulierungen für bestimmte Einsatzzwecke.

### Beispiel 26

### Formulierung zum Beschichten von Oberflächen wie Holz (Topcoat)

| **Komponente** | **Art** | **Menge (Gewichtsteile)** |
|---|---|---|
| Monomere | Epoxyacrylat, z.B. Laromer LR 8986 | 55 |
| Reaktivverdünner | niedermolekulare Di- oder Triacrylate; z.B. Tripropylenglycoldiacrylat | 26,5 |
| Regler | Formel 1 oder 2, n = 2, z.B. Verbindung **3** | 10 |
| Initiator | Photoinitiator, z.B. Irgacure 500; Amin-Synergist: Laromer LR 8956 | 3 2 |
| Lösungsmittel | keines | - |
| Additive | Mattierungsmittel: z.B. Talcum 10MOOS; | 10 |
| | Wachs: Ceraflour 950; | 3 |
| | Entschäumer: Tego Airex 920 | 0,5 |

Durch die Verwendung von Epoxyacrylaten wird eine besonders strapazierfähige Oberfläche erzielt, was speziell bei der Beschichtung von Metalloberflächen von Vorteil ist. Dieser Effekt kann durch Miteinbeziehung von Reglern wie z.B. Verbindung **3** weiter verstärkt werden. Die Gegenwart des als Comonomer wirkenden Reaktivverdünners bewirkt zusätzlich eine Herabsetzung der Verarbeitungsviskosität und eine Verbesserung der mechanischen Eigenschaften.

### Beispiel 27

### Formulierung für den 3D-Druck

| **Komponente** | **Art** | **Menge (Gewichtsteile)** |
|---|---|---|
| Monomer | Dimethacrylate, z.B. Polyesterurethandimethacrylat Bomar XR 741 | 100 |
| Regler | Verbindung **6** | 12 |
| Initiator | Photoinitiator, etwa eine Bisacylgermanium-Verbindung, z.B. Ivocerin | 1 |
| Additive | UV-Absorber, z.B. Sudangelb | 0,2 |

Durch die Verwendung von Urethanmethacrylaten wird eine besonders gute Lagerstabilität erreicht. Die langwellige Absorption des Photoinitiators ist an das Emmissionsspektrum des 3D-Druckers angepasst. Der UV-Absorber verhindert Streulicht und kontrolliert die Schichtdicke der Härtung. Durch den erfindungsgemäßen Einsatz des Reglers kann die Schlagzähigkeit des Materials signifikant verbessert werden.

### Beispiel 28

### Formulierung für Gießharze

| **Komponente** | **Art** | **Menge (Gewichtsteile)** |
|---|---|---|
| Monomere | Methacrylate, z.B. Methylmethacrylat | 75 |
| Regler | Formel 1 oder 2, n = 1, z.B. Verbindung **2** | 20 |
| Füllstoffe | Polymethylmethacrylat (MG 4,76 x 10⁶) | 4 |
| Initiator | thermischer Initiator, z.B. AIBN | 1 |
| Additive | Formtrennmittel: Stearinsäure | 0,005 |

Durch die Verwendung von Methacrylaten werden besonders lichtstabile, thermisch härtbare Gießmassen erhalten. Der Einsatz relativ großer Mengen des Reglers verschiebt den Gelpunkt hin zu hohen Umsätzen, wodurch die Eigenspannungen im Material erheblich reduziert werden können.

### Beispiel 29

### Formulierung zur Herstellung von Biomaterialien mittels Knochenzement

| **Komponente** | **Art** | **Menge (Gewichtsteile)** |
|---|---|---|
| Monomer | Divinylester, z.B. Glucidoldivinyladipat | 100 |
| Regler | Formel 1 oder 2, n = 1; | |
| | z.B. Verbindung **1** | 15 |
| Initiator | thermischer Initiator, z.B. | |
| | Dibenzoylperoxid und | 1 |
| | Dimethylaminobenzoesäureethylester | 0,5 |
| Additive | Füllstoffe, z.B. Tricalciumphosphat | 20 |

Durch die Verwendung des Zucker-basierten Vinylesters wird eine besonders gute Biokompatibilität erreicht. Die Abbauprodukte (Glucidol, Adipinsäure und Oligovinyl-alkohol) sind ausgezeichnet biokompatibel. Durch den Füllstoff Tricalciumphosphat wird eine verbesserte Zellanhaftung und Remodelling erreicht. Durch das Redox-Initiator System kann eine Zwei-Komponenten-Injektionspaste hergestellt werden, die innerhalb von 30 bis 60 min aushärtet und mechanische Eigenschaften ähnlich jenen von Knochen ergibt. Durch den erfindungsgemäßen Einsatz des Reglers kann die Sprödigkeit um einen Faktor von bis zu 10 reduziert werden.

### Beispiel 30

### Formulierung zur Herstellung von Hydrogelen für die Geweberegeneration

| **Komponente** | **Art** | **Menge (Gewichtsteile)** |
|---|---|---|
| Monomer | Divinylester, z.B. Polyethylengykoldivinyladipat | 100 |
| Regler | Formel 2, n = 2, X = -COO-, A = H, B = C₆H₄ | 10 |
| Initiator | Photoinitiator, z.B. Li-TPO (Li-Salz von kommerziell erhältlichem Lucerin TPO-L (siehe Biomaterials 30(35), 6702-6707 (2009)) | 1 |
| Lösungsmittel | wässrig; z.B. PPS-Puffer | 400 |

Durch die Verwendung von Polyethylenglykol im Basismonomer ist gute Wasserlöslichkeit gegeben, und durch den Vinylester als reaktive Gruppe wird eine besonders hohe Biokompatibilität erreicht. Die freien Carboxylgruppen des Reglers ergeben für dieses Reagens ebenfalls gute Löslichkeit im PBS-Puffer (phosphatgepufferte Kochsalzlösung). Solche Formulierungen sind besonders gut geeignet, um in der Gegenwart von Gewebe bzw. lebenden Zellen Hydrogel-Netzwerke zu bilden. Durch die erfindungsgemäße Verwendung des Reglers kann die Sprödigkeit solcher Hydrogele deutlich reduziert werden.

### Beispiel 31

### Formulierung zur Herstellung von Druckfarbe für den Tintenstrahldruck

| **Komponente** | **Art** | **Menge (Gewichtsteile)** |
|---|---|---|
| Monomer | Di- und Triacrylate, z.B. Hexandioldiacrylat und propoxyliertes Trimethylolpropantriacrylat (SR 492, Sartomer) | 59 |
| | | 10 |
| Regler | Formel 1, n = 2: | |
| | z.B. Verbindung 5 | 15 |
| Initiator | Photoinitiator, z.B. Lucerin TPO-L | 3 |
| Additive | Pigment: z.B. C.I. Pigment Violet 19; | 10 |
| | Dispergiermittel: Disperbyk 162; | 15 |
| | Inhibitor: BHT | 0,1 |

Durch die Verwendung von multifunktionellen Acrylaten wird eine hohe Reaktivität gewährleistet. Niedermolekulare Verbindungen gewährleisten eine niedrige Viskosität. Initiator und Pigment sind bezüglich ihres Absorptionsverhaltens aufeinander abgestimmt. Durch den erfindungsgemäßen Zusatz des Reglers kann die Sprödigkeit der Druckfarbe herabgesetzt werden, ohne die Reaktivität zu senken.

### Beispiel 32

### Formulierung zur Herstellung von Stempeln für die Nano-Imprintlithographie

| **Komponente** | **Art** | **Menge (Gewichtsteile)** |
|---|---|---|
| Monomer | oligomere Urethanacrylate und Reaktivverdünner, z.B. aromatisches Urethandiacrylat (CN 976, Sartomer) und | 35 |
| | propoxyliertes Trimethylolpropantriacrylat (SR 492, Sartomer) | 10 |
| Regler | Formel 2, n = 2: | |
| | z.B. Verbindung 6 | 10 |
| Initiator | Photoinitiator, z.B. Irgacure 819 | 3 |
| Additive | Inhibitor: BHT | 0,1 |

Durch die Verwendung von multifunktionellen Acrylaten und aromatischem Urethandiacrylat ist eine gute Basis für zähe und abriebfeste Stempelmaterialien gegeben. Durch den erfindungsgemäßen Zusatz des Reglers kann die Sprödigkeit und Abriebfestigkeit des Stempels weiter deutlich verbessert werden. Außerdem kann eine erheblich bessere Abformgenauigkeit erreicht werden. Dieses Material ist auch als Imprintmaterial geeignet, zu welchem Zweck die Anteile des Reaktivverdünners beispielsweise auf etwa 5 Gewichtsteile gesenkt werden können.

### Beispiel 33

### Formulierung zur Herstellung von Druckfarben für den Transferdruck und Siebdruck

| **Komponente** | **Art** | **Menge (Gewichtsteile)** |
|---|---|---|
| Monomer | oligomere Acrylate und Verdünner; z.B. Laromer LR 9013, | 5 |
| | Laromer UA 19T, | 54 |
| | Laromer LR 8986, | 7 |
| | Dipropylenglykoldiacrylat | 15 |
| Regler | Formel 1, n = 2; | |
| | z.B. Verbindung 5 | 15 |
| Initiator | Photoinitiator; z.B. | |
| | Lucerin TPO-L, | 1,5 |
| | Irgacure 369, | 1 |
| | Irgacure 907, | 0,5 |
| | Darocur 1173, | 2 |
| | Coinitiator LR 8956 | 6 |
| Additive | Pigmente; z.B. | |
| | Heliogen Blue D 7092, | 5 |
| | Aerosil 200, | 2 |
| | CAB 551-001 (20%ig in DPGDA) | 1 |

Durch die Verwendung von multifunktionellen Acrylaten wird eine hohe Reaktivität gewährleistet. Initiator und Pigment sind bezüglich ihres Absorptionsverhaltens aufeinander abgestimmt. Durch den erfindungsgemäßen Zusatz des Reglers kann die Sprödigkeit der Druckfarbe herabgesetzt werden, ohne deren Reaktivität zu senken. Besonders bei Textilien bringt dies eine deutlich höhere Beständigkeit gegen das Absplittern der Beschichtung, vor allem bei der Reinigung der Textilien.

### Beispiel 34

### Formulierung zur Herstellung eines Lithographielacks

| **Komponente** | **Art** | **Menge (Gewichtsteile)** |
|---|---|---|
| Monomer | Ebecryl 810, | 25 |
| | Ebecryl 150, | 30 |
| | Tripropylenglykoldiacrylat | 10 |
| Regler | Formel 1, n = 2, | |
| | z.B. Verbindung 5 | 8 |
| Initiator | Photoinitiator, z.B. | |
| | Lucerin TPO-L, | 4 |
| | Irgacure 369, | 4 |
| | Irgacure 907 | 2 |
| Additive | Pigment, z.B. | |
| | Litho Rubin D 4574 DD, | 17 |
| | Inhibitor: BHT | 0,1 |

Durch die Verwendung von multifunktionellen Acrylaten wird eine hohe Reaktivität gewährleistet. Initiator und Pigment sind bezüglich ihres Absorptionsverhaltens aufeinander abgestimmt. Durch den erfindungsgemäßen Zusatz des Reglers kann die Sprödigkeit und Haftung verbessert werden, ohne die Reaktivität zu senken.

### Beispiel 35

### Formulierung für Offset-Drucktinten

| **Komponente** | **Art** | **Menge (Gewichtsteile)** |
|---|---|---|
| Monomere | oligomere Acrylate, z.B. | |
| | Laromer LR 9013 | 18,5 |
| | Laromer LR 9004 | 40 |
| | Laromer LR 8986 | 15,7 |
| Regler | Formel 2, n = 1, | |
| | z.B. Verbindung 2 | 8 |
| Initiator | Photoinitiator, z.B. | |
| | Lucerin TPO-L | 3 |
| | Irgacure 369 | 3 |
| Additive | Pigment; z.B. Permanent Yellow GR 01 | 15,8 |

Durch die Verwendung der oligomeren Acrylate werden entsprechende Reaktivitäten und mechanische Eigenschaften erreicht. Initiator und Pigment sind bezüglich ihres Absorptionsverhaltens aufeinander abgestimmt. Durch den erfindungsgemäßen Zusatz des Reglers kann die Sprödigkeit der Druckfarbe herabgesetzt werden, ohne die Reaktivität zu senken.

### Beispiel 36

### Formulierung für kratzfeste Beschichtungen auf Glas

| **Komponente** | **Art** | **Menge (Gewichtsteile)** |
|---|---|---|
| Monomere | Sartomer CN 965, | 10 |
| | Dipentaerythrolpentaacrylate (SR 399), | 64,2 |
| | propoxyliertes Neopentylglykoldiacrylat (SR 9003) | 16,4 |
| Regler | Formel 2, n = 2, | |
| | z.B. Verbindung 6 | 8 |
| Initiator | Photoinitiator, z.B. | |
| | Benzophenon | 7 |
| | Darocur 1173 | 2 |

Durch die Verwendung der genannten niedermolekularen Acrylate als Monomere werden entsprechende Reaktivitäten und vor allem Kratzfestigkeit erreicht. Durch den erfindungsgemäßen Zusatz des Reglers kann die Sprödigkeit der Beschichtung herabgesetzt werden und damit das Abplatzen verringert werden, ohne die Reaktivität zu senken.

### Beispiel 37

### Formulierung für Silikon-Releasecoatings

| **Komponente** | **Art** | **Menge (Gewichtsteile)** |
|---|---|---|
| Monomere | Silikonacrylate: z.B. | |
| | TEGO RC 711 | 30 |
| | TEGO RC 902 | 70 |
| Regler | Formel 2, n = 2, | |
| | z.B. Verbindung 6 | 5 |
| Initiator | Photoinitiator, z.B. | |
| | TEGO A17 | 2 |

Durch die Verwendung der Silikonacrylate können sehr gute Silikon-Releasecoatings hergestellt werden. Nachteilig ist das Alterungsverhalten, wo der Klebstoff der Etiketten mit nicht umgesetzten Acrylaten reagieren kann und es somit zu einem schlechten Ablöseverhalten kommt. Durch den erfindungsgemäßen Zusatz des Reglers kann der Doppelbindungsumsatz der Beschichtung deutlich erhöht werden, ohne die Reaktivität zu senken.

### Beispiel 38

### Formulierung zum Beschichten von Metalloberflächen (z.B. Stahl)

| **Komponente** | **Art** | **Menge (Gewichtsteile)** |
|---|---|---|
| Monomere | Polyetherurethandiacrylat, z.B. Bomar BR 344 | 50 |
| Reaktivverdünner | niedermolekulare Di- oder Triacrylate: z.B. Dipropylenglykoldiacrylat | 50 |
| Regler | Formel 1 oder 2, n = 2, | |
| | z.B. Verbindung **3** | 10 |
| Initiator | Photoinitiator, z.B. | |
| | Isopropylthioxanthon, | 1 |
| | Methyldiethanolamin | 1 |
| Additive | Pigmente, z.B. Titandioxid | 15 |

Durch die Verwendung von Urethanacrylaten wird eine besonders gute Haftung erzielt, was speziell bei der Beschichtung von Metalloberflächen von Vorteil ist. Dieser Effekt kann durch Miteinbeziehung von Reglern wie z.B. Verbindung 3 weiter verstärkt werden. Die Gegenwart des als Comonomer wirkenden Reaktivverdünners bewirkt zusätzlich ein Herabsetzen der Verarbeitungsviskosität und eine Verbesserung der mechanischen Eigenschaften.

## Patentansprüche

1. Verwendung von Sulfonsäureestern der nachstehenden Formel 1 und/oder Formel 2, einzeln oder als Gemisch mehrerer davon, als Regler bei Polymerisationsreaktionen von radikalisch polymerisierbaren, ethylenisch ungesättigten Monomeren: 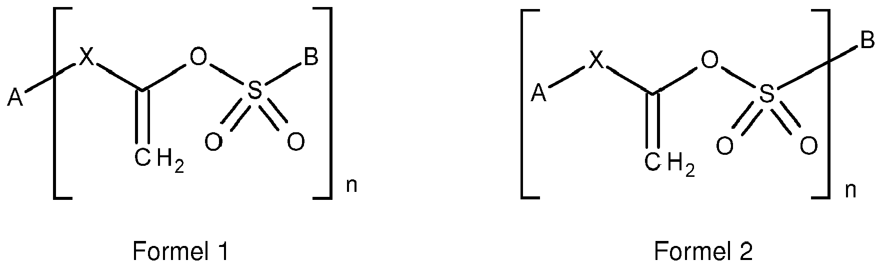 worin
A jeweils unabhängig ausgewählt ist aus H, CN, linearen, verzweigten oder zyklischen aliphatischen oder aromatischen C₁-C₃₀-Kohlenwasserstoffresten, die gegebenenfalls mit einem oder mehreren Substituenten substituiert sind, wobei die aliphatischen Kohlenwasserstoffreste gegebenenfalls durch eine oder mehrere Urethangruppen, Estergruppen, O und/oder S unterbrochen sind;
X jeweils unabhängig -COO- oder -CON(R¹)- ist, wobei die Bindung an A über O oder N erfolgt, oder fehlt, wenn A ein aromatischer Kohlenwasserstoffrest oder CN ist;
B jeweils unabhängig ausgewählt ist aus linearen, verzweigten oder zyklischen aliphatischen oder aromatischen C₁-C₃₀-Kohlenwasserstoffresten, die gegebenenfalls mit einem oder mehreren Substituenten substituiert sind, wobei die aliphatischen Kohlenwasserstoffreste gegebenenfalls durch eine oder mehrere Urethangruppen, Estergruppen, O und/oder S unterbrochen sind;
R¹ jeweils unabhängig ausgewählt ist aus Wasserstoff und linearen, verzweigten oder zyklischen aliphatischen oder aromatischen C₁-C₁₀-Kohlenwasserstoffresten, die gegebenenfalls mit einer oder mehreren OH-Gruppen substituiert sind, wobei die aliphatischen Kohlenwasserstoffreste gegebenenfalls durch ein oder mehrere Sauerstoffatome unterbrochen sind; und
n jeweils unabhängig eine ganze Zahl von 1 bis 6 ist.

2. Verwendung nach Anspruch 1, **dadurch gekennzeichnet, dass** das Molverhältnis zwischen den ethylenischen Unsättigungen in den radikalisch polymerisierbaren Monomeren und den Sulfonatgruppierungen in den Sulfonsäureestern der Formeln 1 und 2 zumindest 3:1, vorzugsweise zumindest 5:1 oder zumindest 10:1, beträgt.

3. Verwendung nach Anspruch 1 oder 2, **dadurch gekennzeichnet, dass** die ethylenisch ungesättigten Monomere aus (Meth)acrylaten, Vinylestern und Gemischen davon ausgewählt sind.

4. Verwendung nach Anspruch 3, **dadurch gekennzeichnet, dass** die ethylenisch ungesättigten Monomere aus multifunktionellen (Meth)acrylaten und Vinylestern ausgewählt sind.

5. Verwendung nach einem der vorangegangenen Ansprüche, **dadurch gekennzeichnet, dass** in der Polymerisationsreaktion zumindest ein radikalischer Polymerisationsinitiator und gegebenenfalls zumindest ein Lösungsmittel eingesetzt wird/werden.

6. Verwendung nach einem der vorangegangenen Ansprüche, **dadurch gekennzeichnet, dass** A aus Kohlenwasserstoffresten mit 1 bis 20, vorzugsweise 1 bis 12, Kohlenstoffatomen ausgewählt ist.

7. Verwendung nach einem der vorangegangenen Ansprüche, **dadurch gekennzeichnet, dass** A einen aliphatischen Kohlenwasserstoffrest umfasst, der gegebenenfalls durch 1 bis 4 Urethangruppen, Estergruppen oder Sauerstoffatome, vorzugsweise Sauerstoffatome, unterbrochen ist und gegebenenfalls mit 1 bis 4 OH-Gruppen substituiert ist.

8. Verwendung nach einem der vorangegangenen Ansprüche, **dadurch gekennzeichnet, dass** A und/oder B zumindest einen Phenyl-, Phenylen-, Naphthyl- oder Naphthylenrest, vorzugsweise 1 bis 4, noch bevorzugter 1 oder 2, Phenyl- oder Phenylenreste, umfassen, die jeweils gegebenenfalls mit 1 bis 3 Substituenten, ausgewählt aus OH, CH₃ und OCH₃ substituiert sind.

9. Verwendung nach einem der vorangegangenen Ansprüche, **dadurch gekennzeichnet, dass** R¹ ein aliphatischer C₁₋₆-Kohlenwasserstoffrest ist, der gegebenenfalls durch 1 bis 2 Sauerstoffatome unterbrochen ist und gegebenenfalls mit 1 bis 2 OH-Gruppen substituiert ist.

10. Verwendung nach einem der vorangegangenen Ansprüche, **dadurch gekennzeichnet, dass** entweder
i) X -COO- ist, wobei die Bindung an A über O erfolgt, oder
ii) X fehlt, in welchem Fall A ein aromatischer Kohlenwasserstoffrest mit 6 Kohlenstoffatomen ist, der gegebenenfalls mit 1 bis 3 Substituenten, ausgewählt aus -CH₃, -OH und -OCH₃ substituiert ist.

11. Verwendung nach einem der vorangegangenen Ansprüche, **dadurch gekennzeichnet, dass** n = 2 bis 4, vorzugsweise 2, ist.

12. Verwendung nach einem der vorangegangenen Ansprüche, **dadurch gekennzeichnet, dass**
a) A für n = 1 aus gegebenenfalls verzweigtem und gegebenenfalls durch Sauerstoffatome unterbrochenem C₁₋₁₀-Alkyl und Phenyl ausgewählt ist, die bei n > 1 mit weiteren Sulfonsäurevinylester- oder Sulfonyloxyacryloyloxy- bzw. Sulfonyloxyacrylamido-Gruppierungen substituiert sein können; und/oder
b) B für n = 1 aus OH, C₁₋₁₀-Alkyl, Phenyl und Naphthyl ausgewählt ist, die gegebenenfalls mit OH, C₁₋₆-Alkyl oder -Alkoxy, Benzyl oder Phenoxy substituiert sind und bei n > 1 mit weiteren Vinyloxysulfonyl-Gruppierungen substituiert sein können; und/oder
c) R¹ aus C₁₋₁₀-Alkyl ausgewählt ist.

13. Verwendung nach einem der vorangegangenen Ansprüche, **dadurch gekennzeichnet, dass** der oder die Sulfonsäureester der Formel 1 und/oder der Formel 2 ausgewählt ist/sind aus:

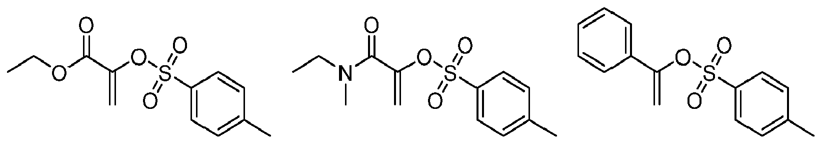

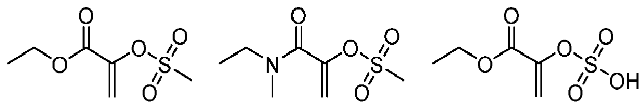

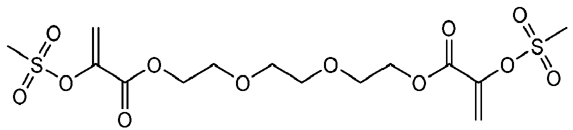

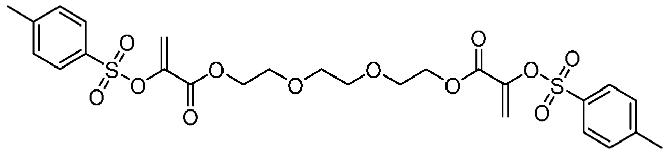

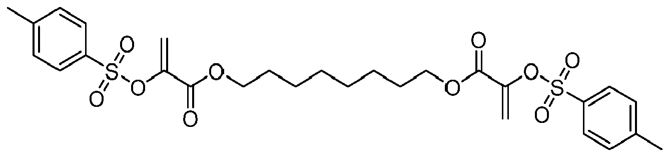

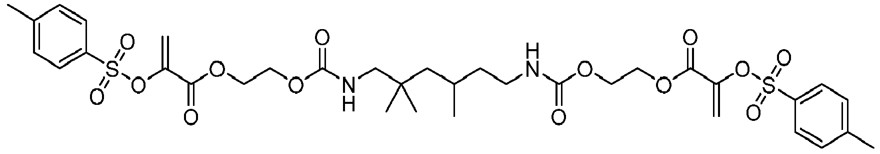

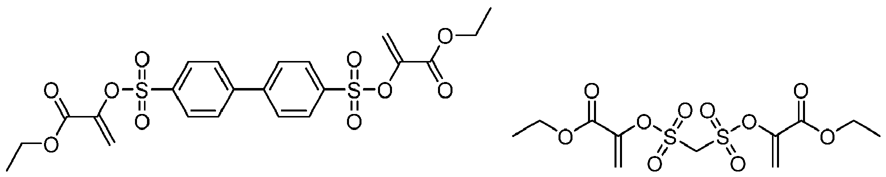

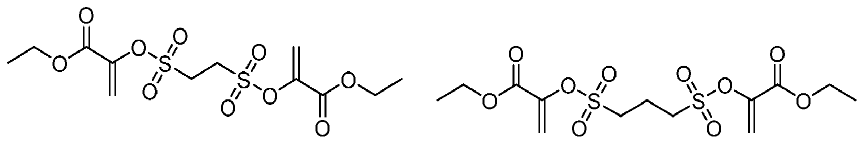

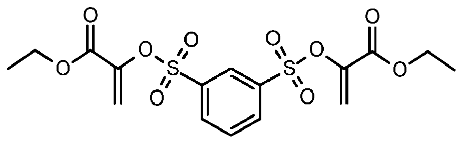

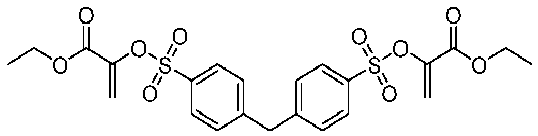

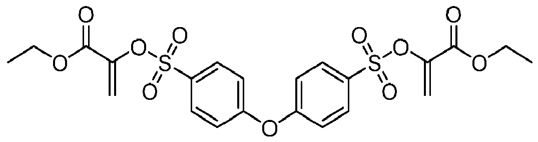

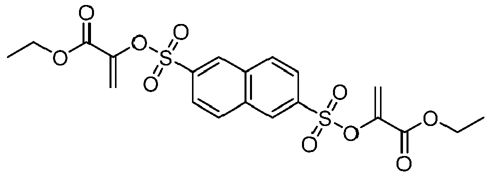

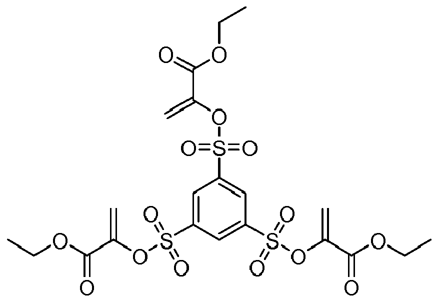

14. Verwendung nach einem der vorangegangenen Ansprüche, **dadurch gekennzeichnet, dass**
a) 50 bis 99 Gew.-%, vorzugsweise 60 bis 98 Gew.-%, noch bevorzugter 70 bis 95 Gew.-%, der ethylenisch ungesättigten Monomere, bezogen auf das Gesamtgewicht der Monomere und Regler, eingesetzt werden; und/oder
b) 0,01 bis 5 Gew.-%, vorzugsweise 0,1 bis 5 Gew.-%, noch bevorzugter 0,1 bis 3 Gew.-%, zumindest eines radikalischen Polymerisationsinitiators eingesetzt werden; und/oder
c) zumindest ein Lösungsmittel, ausgewählt aus Wasser, Dimethylsulfoxid, Ethanol, Dimethylformamid, Polyethylenglykol und Gemischen davon eingesetzt wird.

15. Polymerisat, erhalten durch radikalische Polymerisation unter Verwendung von Sulfonsäureestern der Formel 1 und/oder Formel 2, wie in einem der Ansprüche 1 bis 14 definiert.

16. Polymerisat nach Anspruch 15, **dadurch gekennzeichnet, dass** die radikalische Polymerisation wie in einem der Ansprüche 4 bis 14 definiert durchgeführt wurde und das Polymerisat ein vernetztes Polymerisat ist.

17. Verwendung eines vernetzten Polymerisats nach Anspruch 15 oder 16 als Lack, Beschichtung oder Klebstoff oder zur Herstellung von Formkörpern durch Gießen oder 3D-Druck.
